# EUROPEAN PATENT SPECIFICATION

(11) **EP 3 407 182 B1**
(45) Date of publication and mention of the grant of the patent: **26.10.2022**
(21) Application number: 16885912.2
(22) Date of filing: 06.04.2016
(51) Int. Cl.: G06F 9/30, G06F 9/35, G06F 9/38

(54) **VECTOR COMPUTING DEVICE**
VEKTORBERECHNUNGSVORRICHTUNG
DISPOSITIF INFORMATIQUE DE CALCUL DE VECTEUR

(30) Priority: 20.01.2016 CN 201610039216
(43) Date of publication of application: 28.11.2018
(73) Proprietor: Cambricon (Xi'an) Semiconductor Co., Ltd., Xi'an City, Shaanxi Province (CN)
(72) Inventor: CHEN, Tianshi, Beijing 100191 (CN); ZHANG, Xiao, Beijing 100191 (CN); LIU, Shaoli, Beijing 100191 (CN); CHEN, Yunji, Beijing 100191 (CN)
(74) Representative: AWA Sweden AB
(86) International application number: PCT/CN2016/078550
(87) International publication number: WO 2017/124648

(56) References cited:
- CN-A- 102 495 721
- CN-A- 103 699 360
- CN-A- 104 699 458
- US-A- 4 541 046
- US-A- 5 689 653
- US-A1- 2004 103 262
- US-A1- 2011 138 155
- US-A1- 2014 244 967
- US-B1- 8 108 652

## Description

### TECHNICAL FIELD

The subject disclosure relates to a vector computing device for executing vector operations according to a vector operation instruction, offering a solution to the problem in the prior art where more and more algorithms involve a large number of vector operations.

### BACKGROUND

In the current computer field, there are more and more algorithms involving vector operation. For example, in artificial neural network algorithm, a plurality of neural network algorithms contain numerous vector operations. In the neural network, operation expression of output neuron is y=f (wx+b), wherein w is matrix, x and b are vectors, and the process of computing the output vector y is to multiply the matrix w by the vector x, add the product to the vector b, and then perform activation function operation on the acquired vector (i.e. to perform activation function operation on each element in the vector). Hence, the vector operation now has become an important issue in designing various computing devices.

In the prior art, one solution to conduct vector operation is to use a general-purpose processor by executing a general instruction via general-purpose register file and general-purpose functional unit to perform vector operations. However, one defect of the solution is the low operation performance during vector operation triggered because a single general-purpose processor is primarily used for scalar computation. On the other hand, using multiple general-purpose processors for concurrent execution may lead to a possible performance bottleneck resulting from the intercommunication among such processors.

In another prior art, vector computation is conducted by using graphics processing unit (GPU), wherein general-purpose register file and general-purpose stream processing unit are used to execute general SIMD instruction, thereby performing vector operation. Nonetheless, in the above-mentioned solution, GPU's on-chip small caching in performing large-scale vector operations requires a constant transportation of off-chip data, which makes off-chip bandwidth a main performance bottleneck.

In another prior art, a specialized vector operation device is used to perform vector computation, wherein customized register file and processing unit are used to perform vector operation. Limited by the register file, however, the present specialized vector operation device is unable to flexibly support vector operations of different lengths. US 2004/103262 A1 relates to a vector register file with arbitrary vector addressing. US 4541046 A relates to a data processing system including scalar data processor and vector data processor. US 2014/244967 A1 relates to a vector register addressing and functions based on a scalar register data value. And US 5689653 A relates to a vector memory operation.

### SUMMARY

### Technical problems to be solved

The subject disclosure aims to provide a vector computing device to solve the problems existing in the prior art, such as inter-chip communication, insufficient on-chip cache, and inflexible supported vector length.

### Technical solution

The invention is defined by the appended claims. The subject disclosure provides a vector computing device used for executing a vector operation according to a vector operation instruction, comprising:
A storage unit for storing vectors.

A register unit for storing vector addresses, wherein vector addresses are the addresses where vectors are stored in the storage unit.

A vector operations unit for acquiring a vector operation instruction, obtaining a vector address from the register unit according to the vector operation instruction, and then gaining a corresponding vector from the storage unit according to the vector address, subsequently performing a vector operation according to the acquired vector so as to have a vector operation result.

Achievements.

The vector computing device in the subject disclosure is able to temporarily store vector data involved in computation in a Scratchpad Memory, allowing vector operation to support widths with different data more flexibly and effectively while enabling an improved performance for executing computing tasks comprising a large number of vectors.

### BRIEF DESCRIPTION OF THE DRAWINGS

Fig. 1 is a structure diagram of the vector computing device provided by the subject disclosure.
Fig. 2 is a format diagram of the instruction set provided by the subject disclosure.
Fig. 3 is a structure diagram of the vector computing device provided by the embodiments of the subject disclosure.
Fig. 4 is a flowchart illustrating the process that the vector computing device provided by the embodiments of the subject disclosure executes a vector dot product instruction.
Fig. 5 is a structure diagram of the vector operations unit provided by the embodiments of the subject disclosure.

### EMBODIMENTS

A vector computing device of the present disclosure comprises a storage unit, a register unit and a vector operations unit, wherein vectors are stored in the storage unit, vector storage addresses are stored in the register unit, and the vector operations unit acquires a vector address from the register unit according to a vector operation instruction, and then acquires a corresponding vector from the storage unit according to the vector address, subsequently perform a vector operation according to the acquired vector so as to obtain a vector operation result. The vector computing device in the subject disclosure is able to temporarily store vector data involved in computation in a Scratchpad Memory, allowing in the process of vector operation to support data with different widths more flexibly and effectively while enabling an improved performance for executing computing tasks comprising a large number of vectors.

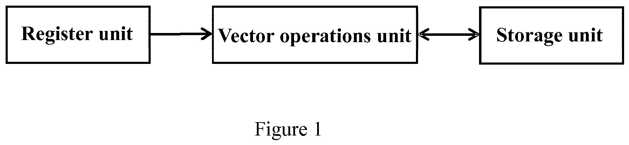

Fig. 1 is a structure diagram of the vector computing device provided by the subject disclosure. As shown in Fig. 1, the vector computing device comprises:
a storage unit for storing vectors; in one embodiment, the storage unit can be a Scratchpad Memory for supporting vector data of different sizes; in the subject disclosure, the necessary computational data are temporarily stored in the Scratchpad Memory to enable the computing device to more flexibly and effectively support data of different widths during vector operations.
a register unit for storing vector addresses, wherein vector addresses are the ones where the vectors are stored in the storage unit; the register unit is a scalar register file providing a scalar register as required during operations, and the scalar register stores vector addresses as well as scalar data. As vector and scalar operations are involved, the vector operations unit is not only to acquire a vector address from the register unit, but also to obtain a corresponding scalar from the register unit.
a vector operations unit for acquiring a vector operation instruction, obtaining a vector address from said register unit according to the vector operation instruction, and then gaining a corresponding vector from the storage unit according to the vector address, subsequently performing a vector operation according to the acquired vector so as to obtain a vector operation result and store the vector operation result in the storage unit. The vector operations unit comprises a vector addition element, a vector multiplication element, a value comparing element, a nonlinear operation element and a vector-scalar-multiplication element; furthermore, the vector operations unit is of the structure of multiple-stage pipeline, wherein the vector addition element and the vector multiplication element are arranged in the first stage of pipeline, the value comparing element in the second stage, and the nonlinear operation element and the vector-scalar-multiplication element in the third stage. Due to the fact that such elements are arranged in different stages of pipeline, when the order of the successive serial multiple vector operation instructions is consistent with pipeline order of the corresponding units, the operations as demanded by the series of vector operation instructions can be more effectively achieved. All the vector operations of the device are performed by the vector operations unit, including but not limited to vector addition operation, vector added to scalar operation, vector subtraction operation, scalar subtracted from vector operation, vector multiplication operation, vector multiplied by scalar operation, vector division (contrapuntally divided) operation, vector AND operation, and vector OR operation, and the vector operation instructions are sent to the operations unit for execution.

According to one embodiment of the subject disclosure, the vector computing device further comprises an instruction cache unit for storing a vector operation instruction to be executed. While being executed, an instruction is cached in the instruction cache unit as well. When execution of an instruction has been completed, if such instruction is also the earliest one among those instructions in the instruction cache unit that have not been submitted, then it will be submitted; once such instruction is submitted, the status change of the device caused by operation performed by such instruction cannot be cancelled. In one embodiment, the instruction cache unit can be a reorder cache.

According to one embodiment of the subject disclosure, the vector computing device further comprises an instruction processing unit for acquiring a vector operation instruction from the instruction cache unit and processing the vector operation instruction and providing it to said vector operations unit, wherein the instruction processing unit comprises:
an instruction fetching module for acquiring a vector operation instruction from the instruction cache unit;
a decoding module for decoding the acquired vector operation instruction;
an instruction queue for performing a sequential storage for the decoded vector operation instruction, and, considering the possible dependency relationship between different instructions on the register, for caching the decoded instruction and then sending the instruction when the dependency relationship is satisfied.

According to one embodiment of the subject disclosure, the vector computing device further comprises a dependency relationship processing unit for: before the vector operations unit acquires the vector operation instruction, determining whether the vector operation instruction accesses the same vector as the previous vector operation instruction: if it does, the vector operation instruction will be stored in a storage queue, and that vector operation instruction in the storage queue will then be provided to said vector operations unit until the execution of the previous vector operation instruction is completed; otherwise, the vector operation instruction will be directly provided to said vector operations unit. Specifically, when the vector operation instruction accesses the Scratchpad Memory, successive instructions may access the same memory space, and to ensure the correctness of an execution result of the instruction, the present instruction, if detected to have a dependency relationship with data of the previous instruction, must wait within the storage queue until such dependency relationship is eliminated.

According to one embodiment of the subject disclosure, the vector computing device further comprises an in-out unit for storing vectors in the storage unit, or for acquiring a vector operation result from the storage unit, wherein the in-out unit can directly connect with the storage unit and is used for reading or writing vector data from or in the memory.

According to one embodiment of the subject disclosure, structure of Load/Store is adopted by the instruction set used for the device of the subject disclosure, and the vector operations unit will not operate data in the memory. Preferably, the instruction set adopts fixed length instruction.

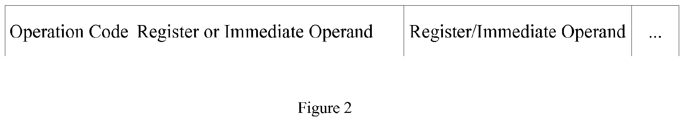

Fig.2 is a format diagram of the instruction set provided by the subject disclosure. As shown in Fig. 2, the vector operation instruction includes an operation code and at least one operation field, wherein the operation code is used for indicating function of the vector operation instruction, and the vector operations unit is to perform different vector operations by identifying the operation code; and the operation field is used for indicating data information of the vector operation instruction, wherein data information can be an immediate operand or a register number. For example, to acquire a vector, vector starting address and vector length can be obtained from the corresponding register according to a register number, and then the vector stored in the corresponding address can be obtained from the storage unit according to the vector starting address and vector length.

The instruction set comprises vector operation instructions different in function.

Vector Addition Instruction (VA). According to the instruction, the device respectively retrieves two blocks of vector data of a specified size from specified addresses of the Scratchpad Memory to performs addition operation in the vector operations unit, and writes the result back into a specified address of the Scratchpad Memory;
Vector Added to Scalar Instruction (VAS). According the instruction, the device retrieves vector data of a specified size from a specified address of the Scratchpad Memory and scalar data from a specified address of the scalar register file, adds the scalar value to each element of vector in the scalar operations unit, and writes the result back into a specified address of the Scratchpad Memory;
Vector Subtraction Instruction (VS). According to the instruction, the device respectively retrieves two blocks of vector data of a specified size from specified addresses of the Scratchpad Memory, performs subtraction operation in the vector operations unit, and writes the result back into a specified address of the Scratchpad Memory;
Scalar Subtracted Vector Instruction (SSV). According the instruction, the device retrieves scalar data from a specified address of the scalar register file and vector data from a specified address of the Scratchpad Memory , subtracts the corresponding element of the vector from the scalar in the vector operations unit, and writes the result back into a specified address of the Scratchpad Memory;
Vector Multiplied by Vector Instruction (VMV). According to the instruction, the device respectively retrieves vector data of a specified size from specified addresses of the Scratchpad Memory, performs a contrapuntal multiplication operation on the two vector data in the vector operations unit, and writes the result back into a specified address of the Scratchpad Memory;
Vector Multiplied by Scalar Instruction (VMS). According to the instruction, the device retrieves vector data of a specified size from a specified address of the Scratchpad Memory and scalar data of a specified size from a specified address of the scalar register file, performs a Vector Multiplied by Scalar operation in the vector register unit, and writes the result back into a specified address of the Scratchpad Memory;
Vector Division Instruction (VD). According to the instruction, the device respectively retrieves vector data of a specified size from specified addresses of the Scratchpad Memory, contrapuntally divides two vectors in the vector operations unit, and writes the result back into a specified address of the Scratchpad Memory;
Scalar Divided by Vector Instruction (SDV). According to the instruction, the device retrieves scalar data from a specified address of the scalar register file and vector data of a specified size from a specified address of the Scratchpad Memory, respectively divides the scalar by the respective element of the vector in the vector operations unit, and writes the result back into a specified address of the Scratchpad Memory;
Vector AND Vector Instruction (VAV). According to the instruction, the device respectively retrieves vector data of a specified size from specified addresses of the Scratchpad Memory, performs a contrapuntal AND operation on the two vectors in the vector operations unit, and writes the result back into a specified address of the Scratchpad Memory;
Vector AND Instruction (VAND). According to the instruction, the device retrieves vector data of a specified size from a specified address of the Scratchpad Memory, performs AND operations on each bit of the vector in the vector operations unit, and writes the result back into a specified address of the scalar register file;
Vector OR Vector Instruction (VOV). According to the instruction, the device respectively retrieves vector data of a specified size from specified addresses of the Scratchpad Memory, perform a contrapuntal OR operation on the two vectors in the vector operations unit, and writes the result back into a specified address of the Scratchpad Memory;
Vector OR Instruction (VOR). According to the instruction, the device retrieves vector data of a specified size from a specified address of the Scratchpad Memory, performs OR operations on each bit of the vectors in the vector operations unit, and writes the result back into a specified address of the scalar register file;
Vector Exponent Instruction (VE). According to the instruction, the device retrieves vector data of a specified size from a specified address of the Scratchpad Memory, performs exponent operation for each element of the vector in the vector operations unit, and writes the result back into a specified address of the Scratchpad Memory;
Vector Logarithm Instruction (VL). According to the instruction, the device retrieves vector data of a specified size from a specified address of the Scratchpad Memory, performs logarithm operation for each element of the vector in the vector operations unit, and writes the result back into a specified address of the Scratchpad Memory;
Vector Greater than Instruction (VGT). According to the instruction, the device respectively retrieves vector data of a specified size from specified addresses of the Scratchpad Memory, contrapuntally compares two vector data in the vector operations unit, then places "1" in the respective position in an output vector if the former one is greater than the latter, while places "0" otherwise, and writes the result back into a specified address of the Scratchpad Memory;
Vector Equal Decision Instruction (VEQ). According to the instruction, the device respectively retrieves vector data of a specified size from specified addresses of the Scratchpad Memory, contrapuntally compares two vector data in the vector operations unit, then places "1" in the respective position in an output vector if the former one is equivalent to the latter, while places "0" otherwise, and writes the result back into a specified address of the Scratchpad Memory;
Vector Inverter Instruction (VINV). According to the instruction, the device retrieves vector data of a specified size from a specified address of the Scratchpad Memory, perform a NOT operation to the vector bit by bit, and writes the result back into a specified address of the Scratchpad Memory;
Vector Merger Instruction (VMER). According to the instruction, the device respectively retrieves vector data of a specified size from specified addresses of the Scratchpad Memory, including a selecting vector and a selected vector I and a selected vector II. According to whether an element of the selecting vector is "1" or "0", the vector operations unit selects from the selected vector I or the selected vector II a corresponding element as an element in a corresponding position in an output vector, and writes the result back into a specified address of the Scratchpad Memory;
Vector Maximum Instruction (VMAX). According to the instruction, the device retrieves vector data of a specified size from a specified address of the Scratchpad Memory, selects the maximum element therefrom as a result, and writes the result back into a specified address of the scalar register file;
Scalar to Vector Instruction (STV). According to the instruction, the device retrieves scalar data from a specified address of the scalar register file, extends the scalar to be a vector of a specified length in the vector operations unit, and writes the result back into the scalar register file;
Scalar to Vector Pos N Instruction (STVPN). According to the instruction, the device retrieves scalar from a specified address of the scalar register file and vector data of a specified size from a specified address of the Scratchpad Memory, replaces an element in a specified position of the vector with the scalar value in the vector operations unit, and writes the result back into a specified address of the Scratchpad Memory;
Vector Pos N to Scalar Instruction (VPNTS). According to the instruction, the device retrieves scalar from a specified address of the scalar register file and vector data of a specified size from a specified address of the Scratchpad Memory, replaces the scalar value with an element in a specified position of the vector in the vector operations unit, and writes the result back into a specified address of the scalar register file;
Vector Retrieval Instruction (VR). According to the instruction, the device retrieves vector data of a specified size from a specified address of the Scratchpad Memory, obtains a corresponding element of the vector according to a specified position in the vector operations unit as output, and writes the result back into a specified address of the scalar register file;
Vector Dot Product Instruction (VP). According to the instruction, the device respectively retrieves vector data of a specified size from specified addresses of the Scratchpad Memory, performs dot product operation for the two vectors in the vector operations unit, and writes the result back into a specified address of the scalar register file;
Random Vector Instruction (RV). According to the instruction, the device generates a random vector satisfying uniform distribution ranging from 0 to 1 in the vector operations unit, and writes the result back into a specified address of the Scratchpad Memory;
Vector Cyclic Shift Instruction (VCS). According to the instruction, the device retrieves vector data of a specified size from a specified address of the Scratchpad Memory, performs a cyclic shift operation for the vector according to a specified step size in the vector operations unit, and writes the result back into a specified address of the Scratchpad Memory;
Vector Load Instruction (VLOAD). According to the instruction, the device loads vector data of a specified size from a specified external source address to a specified address of the Scratchpad Memory;
Vector Storage Instruction (VS). According to the instruction, the device stores vector data of a specified size from a specified address of the Scratchpad Memory into an external destination address;
Vector Movement Instruction (VMOVE). According to the instruction, the device stores vector data of a specified size from a specified address of the Scratchpad Memory into another specified address of the Scratchpad Memory;

The term "specified size" involved in the above instructions means that data length can be set by users based on practical requirements, that is, the length is changeable.

More details are provided as follows in reference with examples and drawings to have a full understanding of the advantages and technical solution of the present disclosure.

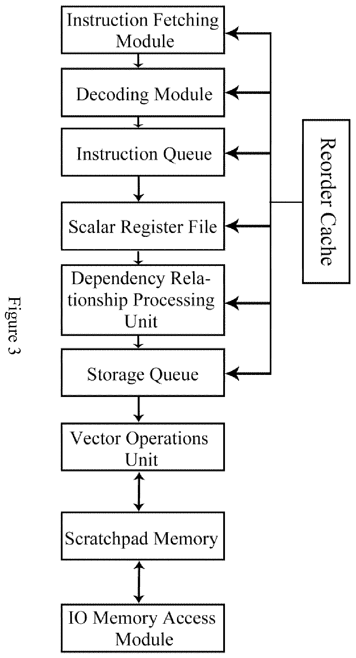

Fig. 3 is a structure diagram of the vector computing device provided by the embodiments of the subject disclosure. As shown in Fig. 3, the device comprises an instruction fetching module, a decoding module, an instruction queue, a scalar register file, a dependency relationship processing unit, a storage queue, a reorder buffer, a vector operations unit, a Scratchpad Memory, and an IO memory access module;

The instruction fetching module is responsible for fetching the next instruction to be executed from the instruction sequence and transmitting the instruction to the decoding module;

The decoding module is responsible for decoding the instruction and transmitting the decoded instruction to the instruction queue;

The instruction queue is responsible for: considering the possible dependency relationship between different instructions on the scalar register, caching the decoded instruction and then sending the instruction when the dependency relationship is satisfied.

The scalar register file is to provide the device with scalar register as needed in operations;

The dependency relationship processing unit is responsible for processing the possible storage dependency relationship between the instruction to be processed and its previous instruction. The vector operation instruction would access the Scratchpad Memory, and successive instructions may access the same memory space. To ensure the correctness of an execution result of the instruction, the current instruction, if detected to have a dependency relationship with data of the previous instruction, must wait within the storage queue until such dependency relationship is eliminated.

The storage queue is a module with a sequential queue, wherein an instruction having a dependency relationship with the previous instruction in terms of data is stored in such queue until the dependency relationship is eliminated;

The reorder buffer: the instructions are cached in the reorder buffer while being executed. When execution of an instruction has been completed, if such instruction is also the earliest one among those instructions in the reorder buffer that have not been submitted, then it will be submitted; once such instruction is submitted, the status change of the device caused by execution of such instruction cannot be cancelled;

The vector operations unit is responsible for all the vector operations of the device, including but not limited to vector addition operation, vector added to scalar operation, vector subtraction operation, scalar subtracted from vector operation, vector multiplication operation, vector multiplied by scalar operation, vector division (contrapuntally divided) operation, vector AND operation, and vector OR operation, and the vector operation instructions are sent to the operations unit for execution;

The Scratchpad Memory is a temporary storage device specialized for vector data, and enabled to support vector data of different sizes;

An IO memory access module is for directly accessing the Scratchpad Memory, and for reading or writing data from or into the Scratchpad Memory.

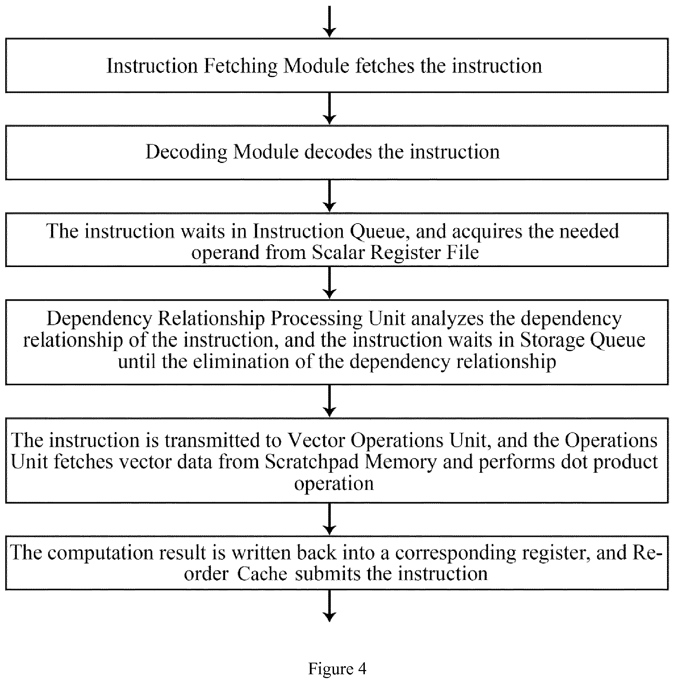

Fig. 4 is a flowchart illustrating the process that the vector computing device provided by the embodiments of the subject disclosure executes a vector dot product instruction. As shown in Fig. 4, the process of performing the vector dot product instruction (VP) comprises:
S1: the instruction fetching module retrieves the vector dot product instruction and transmits the instruction to the decoding module.
S2: the decoding module decodes the instruction, and sends the instruction to the instruction queue.
S3: in the instruction queue, the vector dot product instruction needs to acquire from the scalar register file the data of the scalar register corresponding to four operation fields in the instruction, including starting address of vector vinO, length of vector vinO, starting address of vector vin1 and length of vector vin1.
S4: after acquiring the needed scalar data, the instruction is sent to the dependency relationship processing unit. The dependency relationship processing unit analyzes whether there is a dependency relationship on data between the instruction and the previous instruction the execution of which has not been completed. The instruction needs to wait in the storage queue until it has no dependency relationship on data with the previous uncompleted instruction.
S5: after the dependency relationship does not exist any longer, the vector dot product instruction is transmitted to the vector operations unit. The vector operations unit retrieves the needed vectors from the data transient memory according to address and length of the needed data. Subsequently, the dot product operation is completed in the vector operations unit.
S6: having completed the operation, the device writes the result back into a specified address of the Scratchpad Memory, and simultaneously submits the vector dot product instruction in the reorder buffer.

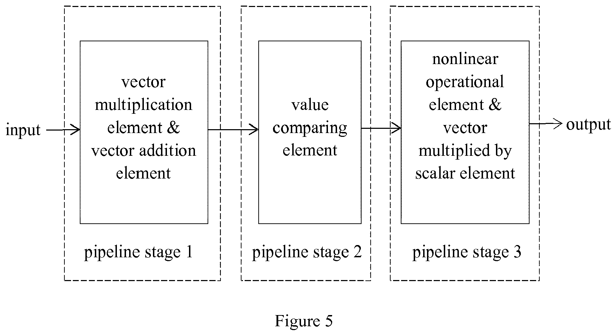

Fig. 5 is a structure diagram of the vector operations unit provided by the embodiments of the subject disclosure. As shown in Fig. 5, the vector operations unit comprises a vector addition operation unit, a value comparing unit, a nonlinear operation unit, and a vector multiplied by scalar unit. Furthermore, the vector operations unit is in the structure of multiple-stage pipeline, wherein the vector addition operation element and the vector multiplication element are arranged in pipeline stage 1, the value comparing element in stage 2, and the nonlinear operation element and the vector multiplied by scalar element in stage 3. Due to the difference of such elements in different stages of pipeline, when the order of the successive serial multiple vector operation instructions is consistent with pipeline order of the corresponding units, the operations as demanded by the series of vector operation instructions can be more effectively achieved.

## Claims

1. A vector operations device used for executing a vector operation according to a vector operation instruction, comprising:
a storage unit for storing vectors;
a register unit for storing vector addresses and scalar data, wherein vector addresses are the addresses where vectors are stored in the storage unit, wherein the register unit is a scalar register file; and
a vector operations unit for acquiring the vector operation instruction, obtaining a vector address from the register unit according to the vector operation instruction, and then obtaining a corresponding vector from the storage unit according to the vector address, subsequently performing a vector operation according to the acquired vector so as to obtain a vector operation result;
**characterized in that**
said vector operation instruction includes an operation code and at least a first operation field and a second operation field, wherein the operation code is used for indicating a function of the vector operation instruction, and the first and second operation fields are used for indicating data information of the vector operation instruction;
wherein the data information is a scalar register number;
wherein the vector operations unit is configured to obtain a vector starting address from a first scalar register of the register unit corresponding to the data information of the first operation field and a vector length from a second scalar register of the register unit corresponding to the data information of the second operation field, and to obtain the vector stored in the corresponding address from the storage unit according to the vector starting address and the vector length.

2. The vector operations device according to Claim 1, further comprising:
an instruction cache unit for storing a vector operation instruction to be executed.

3. The vector operations device according to Claim 2, further comprising:
an instruction processing unit for acquiring the vector operation instruction from the instruction cache unit, processing the vector operation instruction and providing it to said vector operations unit.

4. The vector operations device according to Claim 3, wherein said instruction processing unit comprises:
an instruction fetching module for acquiring the vector operation instruction from the instruction cache unit;
a decoding module for decoding the acquired vector operation instruction; and
an instruction queue for performing a sequential storage for the decoded vector operation instruction.

5. The vector operations device according to Claim 1, further comprising:
a dependency relationship processing unit for: before the vector operations unit acquires the vector operation instruction, determining whether the vector operation instruction accesses the same vector as a previous vector operation instruction: if it does, the vector operation instruction will not be provided to said vector operations unit until the execution of the previous vector operation instruction is completed; otherwise, the vector operation instruction will be directly provided to said vector operations unit.

6. The vector operations device according to Claim 5, wherein when the vector operation instruction accesses the same vector as the previous vector operation instruction, said dependency relationship processing unit stores the vector operation instruction in a storage queue, and that vector operation instruction in the storage queue will not be provided to said vector operations unit until the execution of the previous vector operation instruction is completed.

7. The vector operations device according to Claim 1, wherein said storage unit is also used for storing said vector operation result.

8. The vector operations device according to Claim 6, further comprising:
an input-output unit for storing vectors in said storage unit, or for acquiring the vector operation result from said storage unit.

9. The vector operations device according to Claim 6, wherein said storage unit is a Scratchpad Memory.

10. The vector operations device according to Claim 1, wherein said vector operations unit comprises a vector addition element, a vector multiplication element, a value comparing element, a nonlinear operation element and a vector-scalar-multiplication element.

11. The vector operations device according to Claim 10, wherein said vector operations unit is of the structure of multiple-stage pipeline, wherein the vector addition element and the vector multiplication element are arranged in the first stage of pipeline, the value comparing element in the second stage, and the nonlinear operation element and the vector-scalar-multiplication element in the third stage.

12. The vector operations device according to Claim 1 or 9, wherein said vector operation instruction includes one or any combination of the following instructions: Vector Addition Instruction (VA), Vector Added to Scalar Instruction (VAS), Vector Subtraction Instruction (VS), Scalar Subtracted Vector Instruction (SSV), Vector Multiplied by Vector Instruction (VMV), Vector Multiplied by Scalar Instruction (VMS), Vector Division Instruction (VD), Scalar Divided by Vector Instruction (SDV), Vector AND Vector Instruction (VAV), Vector AND Instruction (VAND), Vector OR Vector Instruction (VOV), Vector OR Instruction (VOR), Vector Exponent Instruction (VE), Vector Logarithm Instruction (VL), Vector Greater than Instruction (VGT), Vector Equal Decision Instruction (VEQ), Vector Inverter Instruction (VINV), Vector Merger Instruction (VMER), Vector Maximum Instruction (VMAX), Scalar to Vector Instruction (STV), Scalar to Vector Pos N Instruction (STVPN), Vector Pos N to Scalar Instruction (VPNTS), Vector Retrieval Instruction (VR), Vector Dot Product Instruction (VP), Random Vector Instruction (RV), Vector Cyclic Shift Instruction (VCS), Vector Load Instruction (VLOAD), Vector Storage Instruction (VS), Vector Movement Instruction (VMOVE).

13. The vector operations device according to Claim 12, wherein
according to said Vector Addition Instruction (VA), the device respectively retrieves two blocks of vector data of a specified size from specified addresses of said storage unit to perform addition operation in the vector operations unit, and writes the result back into said storage unit;
according to said Vector Added to Scalar Instruction (VAS), the device retrieves vector data of a specified size from a specified address of said storage unit and scalar data from a specified address of said register unit, adds the scalar value to each element of vector in a scalar operations unit, and writes the result back into said storage unit;
according to said Vector Subtraction Instruction (VS), the device respectively retrieves two blocks of vector data of a specified size from specified addresses of said storage unit, performs subtraction operation in the vector operations unit, and writes the result back into said storage unit;
according to said Scalar Subtracted Vector Instruction (SSV), the device retrieves scalar data from a specified address of said register unit and vector data from a specified address of said storage unit, subtracts the corresponding element of the vector from the scalar in the vector operations unit, and writes the result back into said storage unit;
according to said Vector Multiplied by Vector Instruction (VMV), the device respectively retrieves vector data of a specified size from specified addresses of said storage unit, performs a vector multiplication operation in the vector operations unit, and writes the result back into said storage unit;
according to said Vector Multiplied by Scalar Instruction (VMS), the device retrieves vector data of a specified size from a specified address of said storage unit and scalar data of a specified size from a specified address of said register unit, performs a Vector Multiplied by Scalar operation in the vector register unit, and writes the result back into said storage unit;
according to said Vector Division Instruction (VD), the device respectively retrieves vector data of a specified size from specified addresses of said storage unit, performs a vector division operation in the vector operations unit, and writes the result back into said storage unit;
according to said Scalar Divided by Vector Instruction (SDV), the device retrieves scalar data from a specified address of said register unit and vector data of a specified size from a specified address of said storage unit, and divides the scalar by the respective element of the vector in the vector operations unit, and writes the result back into said storage unit;
according to said Vector AND Vector Instruction (VAV), the device respectively retrieves vector data of a specified size from specified addresses of said storage unit, performs a contrapuntal AND operation on the two vectors in the vector operations unit, and writes the result back into said storage unit;
according to said Vector AND Instruction (VAND), the device retrieves vector data of a specified size from a specified address of said storage unit, performs AND operations on each bit of the vector in the vector operations unit, and writes the result back into said register unit;
according to said Vector OR Vector Instruction (VOV), the device respectively retrieves vector data of a specified size from specified addresses of said storage unit, perform a contrapuntal OR operation on the two vectors in the vector operations unit, and writes the result back into said storage unit;
according to said Vector OR Instruction (VOR), the device retrieves vector data of a specified size from a specified address of said storage unit, performs OR operations on each bit of the vectors in the vector operations unit, and writes the result back into said register unit;
according to said Vector Exponent Instruction (VE), the device retrieves vector data of a specified size from a specified address of said storage unit, performs exponent operation for each element of the vector in the vector operations unit, and writes the result back into said storage unit;
according to said Vector Logarithm Instruction (VL), the device retrieves vector data of a specified size from a specified address of said storage unit, performs logarithm operation for each element of the vector in the vector operations unit, and writes the result back into said storage unit;
according to said Vector Greater than Instruction (VGT), the device respectively retrieves vector data of a specified size from specified addresses of said storage unit, contrapuntally compares two vector data in the vector operations unit, then places " 1" in the respective position in an output vector if the former one is greater than the latter, while places "0" otherwise, and writes the result back into said storage unit;
according to said Vector Equal Decision Instruction (VEQ), the device respectively retrieves vector data of a specified size from specified addresses of said storage unit, contrapuntally compares two vector data in the vector operations unit, then places "1" in the respective position in an output vector if the former one is equivalent to the latter, while places "0" otherwise, and writes the result back into said storage unit;
according to said Vector Inverter Instruction (VINV), the device retrieves vector data of a specified size from a specified address of said storage unit, perform a NOT operation to the vector bit by bit, and writes the result back into said storage unit;
according to said Vector Merger Instruction (VMER), the device respectively retrieves vector data of a specified size from specified addresses of said storage unit, including a selecting vector and a selected vector I and a selected vector II. according to whether an element of the selecting vector is "1" or "0", the vector operations unit selects from the selected vector I or the selected vector II a corresponding element as an element in a corresponding position in an output vector, and writes the result back into said storage unit;
according to said Vector Maximum Instruction (VMAX), the device retrieves vector data of a specified size from a specified address of said storage unit, selects the maximum element therefrom as a result, and writes the result back into said register unit;
according to said Scalar to Vector Instruction (STV), the device retrieves scalar data from a specified address of said register unit, extends the scalar to be a vector of a specified length in the vector operations unit, and writes the result back into said register unit;
according to said Scalar to Vector Pos N Instruction (STVPN), the device retrieves scalar from a specified address of said register unit and vector data of a specified size from a specified address of said storage unit, replaces an element in a specified position of the vector with the scalar value in the vector operations unit, and writes the result back into said storage unit;
according to said Vector Pos N to Scalar Instruction (VPNTS), the device retrieves scalar from a specified address of said register unit and vector data of a specified size from a specified address of said storage unit, replaces the scalar value with an element in a specified position of the vector in the vector operations unit, and writes the result back into said register unit;
according to said Vector Retrieval Instruction (VR), the device retrieves vector data of a specified size from a specified address of said storage unit, obtains a corresponding element of the vector according to a specified position in the vector operations unit as output, and writes the result back into said register unit;
according to said Vector Dot Product Instruction (VP), the device respectively retrieves vector data of a specified size from specified addresses of said storage unit, performs dot product operation for the two vectors in the vector operations unit, and writes the result back into said register unit;
according to said Random Vector Instruction (RV), the device generates a random vector satisfying uniform distribution ranging from 0 to 1 in the vector operations unit, and writes the result back into said storage unit;
according to said Vector Cyclic Shift Instruction (VCS), the device retrieves vector data of a specified size from a specified address of said storage unit, performs a cyclic shift operation for the vector according to a specified step size in the vector operations unit, and writes the result back into said storage unit;
according to said Vector Load Instruction (VLOAD), the device loads vector data of a specified size from a specified external source address to said storage unit;
according to said Vector Storage Instruction (VS), the device stores vector data of a specified size from a specified address of said storage unit into an external destination address; and
according to said Vector Movement Instruction (VMOVE), the device stores vector data of a specified size from a specified address of said storage unit into another specified address of said storage unit.

14. A method for executing a vector operation according to a vector operation instruction, comprising:
storing vectors in a storage unit;
storing vector addresses and scalar data in a register unit, wherein said vector addresses are the addresses where said vectors are stored in the storage unit, wherein the register unit is a scalar register file ; and
performing by a vector operations unit:
acquiring the vector operation instruction, obtaining a vector address from the register unit according to the vector operation instruction, and then obtaining a corresponding vector from the storage unit according to the vector address, subsequently performing a vector operation according to the acquired vector so as to obtain a vector operation result;
**characterized in that**
said vector operation instruction includes an operation code and at least a first operation field and a second operation field, wherein the operation code is used for indicating a function of the vector operation instruction, and the first and second operation fields are used for indicating data information of the vector operation instruction;
wherein the data information is a scalar register number;
the method comprising:
the vector operations unit obtaining
a vector starting address from a first scalar register of the register unit corresponding to data information of the first operation field and
a vector length from a second scalar register of the register unit corresponding to data information of the second operation field, and
obtaining the vector stored in the corresponding address from the storage unit according to the vector starting address and the vector length.

15. The method according to Claim 14, the method comprising:
fetching said vector operation instruction, by an instruction processing unit (S1), and
performing the vector operation on the acquired vector according to said vector operation instruction so as to obtain a vector operation result, and storing said vector operation result in said storage unit.

16. The method according to Claim 14 or 15, wherein said vector operation instruction includes one or any combination of the following instructions: Vector Addition Instruction (VA), Vector Added to Scalar Instruction (VAS), Vector Subtraction Instruction (VS), Scalar Subtracted Vector Instruction (SSV), Vector Multiplied by Vector Instruction (VMV), Vector Multiplied by Scalar Instruction (VMS), Vector Division Instruction (VD), Scalar Divided by Vector Instruction (SDV), Vector AND Vector Instruction (VAV), Vector AND Instruction (VAND), Vector OR Vector Instruction (VOV), Vector OR Instruction (VOR), Vector Exponent Instruction (VE), Vector Logarithm Instruction (VL), Vector Greater than Instruction (VGT), Vector Equal Decision Instruction (VEQ), Vector Inverter Instruction (VINV), Vector Merger Instruction (VMER), Vector Maximum Instruction (VMAX), Scalar to Vector Instruction (STV), Scalar to Vector Pos N Instruction (STVPN), Vector Pos N to Scalar Instruction (VPNTS), Vector Retrieval Instruction (VR), Vector Dot Product Instruction (VP), Random Vector Instruction (RV), Vector Cyclic Shift Instruction (VCS), Vector Load Instruction (VLOAD), Vector Storage Instruction (VS), Vector Movement Instruction (VMOVE).

17. The method according to Claim 16, the method further comprising:
according to said Vector Addition Instruction (VA), respectively retrieving two blocks of vector data of a specified size from specified addresses of said storage unit to perform addition operation in the vector operations unit, and writing the result back into said storage unit;
according to said Vector Added to Scalar Instruction (VAS), retrieving vector data of a specified size from a specified address of said storage unit and scalar data from a specified address of said register unit, adding the scalar value to each element of vector in a scalar operations unit, and writing the result back into said storage unit;
according to said Vector Subtraction Instruction (VS), respectively retrieving two blocks of vector data of a specified size from specified addresses of said storage unit, performing subtraction operation in the vector operations unit, and writing the result back into said storage unit;
according to said Scalar Subtracted Vector Instruction (SSV), retrieving scalar data from a specified address of said register unit and vector data from a specified address of said storage unit, subtracting the corresponding element of the vector from the scalar in the vector operations unit, and writing the result back into said storage unit;
according to said Vector Multiplied by Vector Instruction (VMV), respectively retrieving vector data of a specified size from specified addresses of said storage unit, performing a vector multiplication operation in the vector operations unit, and writing the result back into said storage unit;
according to said Vector Multiplied by Scalar Instruction (VMS), retrieving vector data of a specified size from a specified address of said storage unit and scalar data of a specified size from a specified address of said register unit, performing a Vector Multiplied by Scalar operation in the vector register unit, and writing the result back into said storage unit;
according to said Vector Division Instruction (VD), respectively retrieving vector data of a specified size from specified addresses of said storage unit, performing a vector division operation in the vector operations unit, and writing the result back into said storage unit;
according to said Scalar Divided by Vector Instruction (SDV), retrieving scalar data from a specified address of said register unit and vector data of a specified size from a specified address of said storage unit, and dividing the scalar by the respective element of the vector in the vector operations unit, and writing the result back into said storage unit;
according to said Vector AND Vector Instruction (VAV), respectively retrieving vector data of a specified size from specified addresses of said storage unit, performing a contrapuntal AND operation on the two vectors in the vector operations unit, and writing the result back into said storage unit;
according to said Vector AND Instruction (VAND), retrieving vector data of a specified size from a specified address of said storage unit, performing AND operations on each bit of the vector in the vector operations unit, and writing the result back into said register unit;
according to said Vector OR Vector Instruction (VOV), respectively retrieving vector data of a specified size from specified addresses of said storage unit, performing a contrapuntal OR operation on the two vectors in the vector operations unit, and writing the result back into said storage unit;
according to said Vector OR Instruction (VOR), retrieving vector data of a specified size from a specified address of said storage unit, performing OR operations on each bit of the vectors in the vector operations unit, and writing the result back into said register unit;
according to said Vector Exponent Instruction (VE), retrieving vector data of a specified size from a specified address of said storage unit, performing exponent operation for each element of the vector in the vector operations unit, and writing the result back into said storage unit;
according to said Vector Logarithm Instruction (VL), retrieving vector data of a specified size from a specified address of said storage unit, performing logarithm operation for each element of the vector in the vector operations unit, and writing the result back into said storage unit;
according to said Vector Greater than Instruction (VGT), respectively retrieving vector data of a specified size from specified addresses of said storage unit, contrapuntally comparing two vector data in the vector operations unit, then placing "1" in the respective position in an output vector if the former one is greater than the latter, while placing "0" otherwise, and writing the result back into said storage unit;
according to said Vector Equal Decision Instruction (VEQ), respectively retrieving vector data of a specified size from specified addresses of said storage unit, contrapuntally comparing two vector data in the vector operations unit, then placing " 1" in the respective position in an output vector if the former one is equivalent to the latter, while placing "0" otherwise, and writing the result back into said storage unit;
according to said Vector Inverter Instruction (VINV), retrieving vector data of a specified size from a specified address of said storage unit, performing a NOT operation to the vector bit by bit, and writing the result back into said storage unit;
according to said Vector Merger Instruction (VMER), respectively retrieving vector data of a specified size from specified addresses of said storage unit, including a selecting vector and a selected vector I and a selected vector II. according to whether an element of the selecting vector is " 1" or "0", the vector operations unit selecting from the selected vector I or the selected vector II a corresponding element as an element in a corresponding position in an output vector, and writing the result back into said storage unit;
according to said Vector Maximum Instruction (VMAX), retrieving vector data of a specified size from a specified address of said storage unit, selecting the maximum element therefrom as a result, and writing the result back into said register unit;
according to said Scalar to Vector Instruction (STV), retrieving scalar data from a specified address of said register unit, extending the scalar to be a vector of a specified length in the vector operations unit, and writing the result back into said register unit;
according to said Scalar to Vector Pos N Instruction (STVPN), retrieving scalar from a specified address of said register unit and vector data of a specified size from a specified address of said storage unit, replacing an element in a specified position of the vector with the scalar value in the vector operations unit, and writing the result back into said storage unit;
according to said Vector Pos N to Scalar Instruction (VPNTS), retrieving scalar from a specified address of said register unit and vector data of a specified size from a specified address of said storage unit, replacing the scalar value with an element in a specified position of the vector in the vector operations unit, and writing the result back into said register unit;
according to said Vector Retrieval Instruction (VR), retrieving vector data of a specified size from a specified address of said storage unit, obtaining a corresponding element of the vector according to a specified position in the vector operations unit as output, and writing the result back into said register unit;
according to said Vector Dot Product Instruction (VP), respectively retrieving vector data of a specified size from specified addresses of said storage unit, performing dot product operation for the two vectors in the vector operations unit, and writing the result back into said register unit;
according to said Random Vector Instruction (RV), generating a random vector satisfying uniform distribution ranging from 0 to 1 in the vector operations unit, and writing the result back into said storage unit;
according to said Vector Cyclic Shift Instruction (VCS), retrieving vector data of a specified size from a specified address of said storage unit, performing a cyclic shift operation for the vector according to a specified step size in the vector operations unit, and writing the result back into said storage unit;
according to said Vector Load Instruction (VLOAD), loading vector data of a specified size from a specified external source address to said storage unit;
according to said Vector Storage Instruction (VS), storing vector data of a specified size from a specified address of said storage unit into an external destination address; and
according to said Vector Movement Instruction (VMOVE), storing vector data of a specified size from a specified address of said storage unit into another specified address of said storage unit.

18. The method according to any one of Claim 14-17, wherein said storage unit is a Scratchpad Memory.

19. The method according to Claim 15, after fetching said vector operation instruction, the method further comprising:
decoding, by a decoding module, the acquired vector operation instruction (S2); and
performing, by an instruction queue, a sequential storage for the decoded vector operation instruction.

20. The method according to Claim 19, before acquiring said vector operation instruction, the method further comprising:
determining whether said vector operation instruction accesses a same vector as a previous vector operation instruction: if it does, said vector operation instruction will not be provided to said vector operations unit until the execution of the previous vector operation instruction is completed; otherwise, said vector operation instruction will be directly provided to said vector operations unit.

21. The method according to Claim 20, wherein when said vector operation instruction accesses the same vector as the previous vector operation instruction, storing said vector operation instruction in a storage queue, and that vector operation instruction in the storage queue will not be provided to said vector operations unit until the execution of the previous vector operation instruction is completed (S4).

## Patentansprüche

1. Vorrichtung für Vektoroperationen, die zum Ausführen einer Vektoroperation gemäß einer Vektoroperationsanweisung verwendet wird, umfassend:
eine Speichereinheit zum Speichern von Vektoren;
eine Registereinheit zum Speichern von Vektoradressen und Skalardaten, wobei Vektoradressen die Adressen sind, an denen Vektoren in der Speichereinheit gespeichert sind, wobei die Registereinheit eine Skalarregisterdatei ist;
eine Vektoroperationseinheit zum Erfassen der Vektoroperationsanweisung, Erhalten einer Vektoradresse von der Registereinheit gemäß der Vektoroperationsanweisung und dann Erhalten eines entsprechenden Vektors von der Speichereinheit gemäß der Vektoradresse, anschließendem Durchführen einer Vektoroperation gemäß dem erfassten Vektor, um ein Vektoroperationsergebnis zu erhalten;
**dadurch gekennzeichnet, dass**
die Vektoroperationsanweisung einen Operationscode und mindestens ein erstes Operationsfeld und ein zweites Operationsfeld enthält, wobei der Operationscode zur Angabe einer Funktion der Vektoroperationsanweisung verwendet wird und das erste und das zweite Operationsfeld zur Angabe von Dateninformationen der Vektoroperationsanweisung verwendet werden;
wobei die Dateninformationen eine Skalarregisternummer sind;
wobei die Vektoroperationseinheit dafür ausgelegt ist, eine Vektorstartadresse von einem ersten Skalarregister der Registereinheit, die den Dateninformationen des ersten Operationsfeldes entspricht, zu erhalten, und
eine Vektorlänge von einem zweiten Skalarregister der Registereinheit, die den Dateninformationen des zweiten Operationsfeldes entspricht, und
den in der entsprechenden Adresse gespeicherten Vektor von der Speichereinheit gemäß der Vektorstartadresse und der Vektorlänge zu erhalten.

2. Vorrichtung für Vektoroperationen nach Anspruch 1, ferner umfassend:
eine Anweisungszwischenspeichereinheit zum Speichern einer auszuführenden Vektoroperationsanweisung.

3. Vorrichtung für Vektoroperationen nach Anspruch 2, ferner umfassend:
eine Anweisungsverarbeitungseinheit zum Erfassen der Vektoroperationsanweisung von der Anweisungszwischenspeichereinheit, Verarbeiten der Vektoroperationsanweisung und Bereitstellen derer an die Vektoroperationseinheit.

4. Vorrichtung für Vektoroperationen nach Anspruch 3, wobei die Anweisungsverarbeitungseinheit umfasst:
ein Anweisungsabrufmodul zum Erfassen der Vektoroperationsanweisung von der Anweisungszwischenspeichereinheit;
ein Dekodiermodul zum Dekodieren der erfassten Vektoroperationsanweisung; und
eine Anweisungswarteschlange zum Durchführen einer sequenziellen Speicherung für die dekodierte Vektoroperationsanweisung.

5. Vorrichtung für Vektoroperationen nach Anspruch 1, ferner umfassend:
eine Abhängigkeitsbeziehungsverarbeitungseinheit für: bevor die Vektoroperationseinheit die Vektoroperationsanweisung erfasst, Bestimmen, ob die Vektoroperationsanweisung auf den gleichen Vektor zugreift, wie eine vorherige Vektoroperationsanweisung: falls dem so ist, wird die Vektorbetriebsanweisung nicht an die Vektoroperationseinheit bereitgestellt bis die Ausführung der vorherigen Vektoroperationsanweisung abgeschlossen ist; ansonsten wird die Vektoroperationsanweisung direkt an die Vektoroperationseinheit bereitgestellt.

6. Vorrichtung für Vektoroperationen nach Anspruch 5, wobei, wenn die Vektoroperationsanweisung auf den gleichen Vektor zugreift wie die vorherige Vektoroperationsanweisung, die Abhängigkeitsbeziehungsverarbeitungseinheit die Vektoroperationsanweisung in einer Speicherwarteschlange speichert und diese Vektoroperationsanweisung nicht an die Vektoroperationseinheit bereitgestellt wird bis die Ausführung der vorherigen Vektoroperationsanweisung abgeschlossen ist.

7. Vorrichtung für Vektoroperationen nach Anspruch 1, wobei die Speichereinheit auch zum Speichern des Vektoroperationsergebnisses verwendet wird.

8. Vorrichtung für Vektoroperationen nach Anspruch 6, ferner umfassend:
eine Eingabe-Ausgabe-Einheit zum Speichern von Vektoren in der Speichereinheit oder zum Erfassen des Vektoroperationsergebnisses von der Speichereinheit.

9. Vorrichtung für Vektoroperationen nach Anspruch 6, wobei die Speichereinheit ein Scratchpad-Speicher ist.

10. Vorrichtung für Vektoroperationen nach Anspruch 1, wobei die Vektoroperationseinheit ein Vektoradditionselement, ein Vektormultiplikationselement, ein Wertvergleichselement, ein nichtlineares Operationselement und ein Vektor-Skalar-Multiplikationselement umfasst.

11. Vorrichtung für Vektoroperationen nach Anspruch 10, wobei die Vektoroperationseinheit die Struktur einer mehrstufigen Pipeline aufweist, wobei das Vektoradditionselement und das Vektormultiplikationselement in der ersten Stufe der Pipeline angeordnet sind, das Wertvergleichselement in der zweiten Stufe und das nichtlineare Operationselement und das Vektor-Skalar-Multiplikationselement in der dritten Stufe.

12. Vorrichtung für Vektoroperationen nach Anspruch 1 oder 9, wobei die Vektoroperationsanweisung eine oder eine beliebige Kombination der folgenden Anweisungen enthält: Vektoradditionsanweisung (VA), Vektor addiert zu Skalar Anweisung (VAS), Vektorsubtraktionsanweisung (VS), Skalar subtrahierter Vektor Anweisung (SSV), Vektor multipliziert mit Vektor Anweisung (VMV), Vektor multipliziert mit Skalar Anweisung (VMS), Vektordivisionsanweisung (VD), Skalar dividiert durch Vektor Anweisung (SDV), Vektor UND Vektor Anweisung (VAV), Vektor UND Anweisung (VAND), Vektor ODER Vektor Anweisung (VOV), Vektor ODER Anweisung (VOR), Vektor Exponent Anweisung (VE), Vektor Logarithmus Anweisung (VL), Vektor größer als Anweisung (VGT), Vektor gleich Entscheidung Anweisung (VEQ), Vektor Inverter Anweisung (VINV), Vektor Merger Anweisung (VMER), Vektor Maximum Anweisung (VMAX), Skalar zu Vektor Anweisung (STV), Skalar zu Vektor Pos N Anweisung (STVPN), Vektor Pos N zu Skalar Anweisung (VPNTS), Vektor Abruf Anweisung (VR), Vektor Dot-Produkt Anweisung (VP), Zufallsvektor Anweisung (RV), Vektor zyklische Verschiebung Anweisung (VCS), Vektor Lade Anweisung (VLOAD), Vektor Speicher Anweisung (VS), Vektor Bewegung Anweisung (VMOVE).

13. Vorrichtung für Vektoroperationen nach Anspruch 12, wobei
die Vorrichtung, gemäß der Vektoradditionsanweisung (VA), jeweils zwei Blöcke von Vektordaten einer spezifizierten Größe von spezifizierten Adressen der Speichereinheit abruft, um eine Additionsoperation in der Vorrichtung für Vektoroperationen durchzuführen, und das Ergebnis zurück in die Speichereinheit schreibt;
die Vorrichtung, gemäß der Vektor addiert zu Skalar Anweisung (VAS), Daten einer spezifizierten Größe von einer spezifizierten Adresse der Speichereinheit und Skalardaten von einer spezifizierten Adresse der Registereinheit abruft, den Skalarwert zu jedem Element des Vektors in einer Skalaroperationseinheit addiert und das Ergebnis zurück in die Speichereinheit schreibt;
die Vorrichtung, gemäß der Vektorsubstraktionsanweisung (VS) zwei Blöcke der Vektordaten einer spezifizierten Größe von spezifizierten Adressen der Speichereinheit abruft, eine Subtraktionsoperation in der Vektoroperationseinheit durchführt und das Ergebnis zurück in die Speichereinheit schreibt;
die Vorrichtung, gemäß der Skalar subtrahierte Vektor Anweisung (SSV) Skalardaten von einer spezifizierten Adresse der Registereinheit und Vektordaten von einer spezifizierten Adresse der Speichereinheit abruft, das entsprechende Element des Vektors von dem Skalar in der Vektoroperationseinheit subtrahiert und das Ergebnis zurück in die Speichereinheit schreibt;
die Vorrichtung, gemäß der Vektor multipliziert mit Vektor Anweisung (VMV), jeweils Vektordaten einer spezifizierten Größe von spezifizierten Adressen der Speichereinheit abruft, eine Vektormultiplikationsoperation in der Vektoroperationseinheit durchführt und das Ergebnis zurück in die Speichereinheit schreibt;
die Vorrichtung, gemäß der Vektor multipliziert mit Skalar Anweisung (VMS), Vektordaten einer spezifizierten Größe von einer spezifizierten Adresse der Speichereinheit und Skalardaten einer spezifizierten Größe von einer spezifizierten Adresse der Registereinheit abruft, eine Vektor multipliziert mit Skalar Operation in der Vektorregistereinheit durchführt und das Ergebnis zurück in die Speichereinheit schreibt;
die Vorrichtung, gemäß der Vektordivisionsanweisung (VD) jeweils Vektordaten einer spezifizierten Größe von spezifizierten Adressen der Speichereinheit abruft, eine Vektordivisionsoperation in der Vektoroperationseinheit durchführt und das Ergebnis zurück in die Speichereinheit schreibt;
die Vorrichtung, gemäß der Skalar dividiert durch Vektor Anweisung (SDV), Skalardaten von einer spezifizierten Adresse der Registereinheit und Vektordaten einer spezifizierten Größe von einer spezifizierten Adresse der Speichereinheit abruft und den Skalar durch das jeweilige Element des Vektors in der Vektoroperationseinheit dividiert und das Ergebnis zurück in die Speichereinheit schreibt;
die Vorrichtung, gemäß der Vektor UND Vektor Anweisung (VAV), jeweils Vektordaten einer spezifizierten Größe von spezifizierten Adressen der Speichereinheit abruft, eine kontrapunktische UND Operation an den beiden Vektoren in der Vektoroperationseinheit durchführt und das Ergebnis zurück in die Speichereinheit schreibt;
die Vorrichtung, gemäß der Vektor UND Anweisung (VAND), Vektordaten einer spezifizierten Größe von einer spezifizierten Adresse der Speichereinheit abruft, UND Operationen an jedem Bit des Vektors in der Vektoroperationseinheit durchführt und das Ergebnis zurück in die Registereinheit schreibt;
die Vorrichtung, gemäß der Vektor ODER Vektor Anweisung (VOV), jeweils Vektordaten einer spezifizierten Größe von spezifizierten Adressen der Speichereinheit abruft, eine kontrapunktische ODER Operation an den beiden Vektoren in der Vektoroperationseinheit durchführt und das Ergebnis zurück in die Speichereinheit schreibt;
die Vorrichtung, gemäß der Vektor ODER Anweisung (VOR), Vektordaten einer spezifizierten Größe von einer spezifizierten Adresse der Speichereinheit abruft, ODER Operationen an jedem Bit der Vektoren in der Vektoroperationseinheit durchführt und das Ergebnis zurück in die Registereinheit schreibt;
die Vorrichtung, gemäß der Vektor Exponent Anweisung (VE), Vektordaten einer spezifizierten Größe von einer spezifizierten Adresse der Speichereinheit abruft, eine Exponentenoperation für jedes Element des Vektors in der Vektoroperationseinheit durchführt und das Ergebnis zurück in die Speichereinheit schreibt;
die Vorrichtung, gemäß der Vektor Logarithmus Anweisung (VL), Vektordaten einer spezifizierten Größe von einer spezifizierten Adresse der Speichereinheit abruft, eine Logarithmusoperation für jedes Element des Vektors in der Vektoroperationseinheit durchführt und das Ergebnis zurück in die Speichereinheit schreibt;
die Vorrichtung, gemäß der Vektor größer als Anweisung (VGT), jeweils Vektordaten einer spezifizierten Größe von spezifizierten Adressen der Speichereinheit abruft, zwei Vektordaten in der Vektoroperationseinheit kontrapunktisch vergleicht, dann "1" in der jeweiligen Position in einem Ausgangsvektor setzt, wenn der vorherige größer ist als der spätere, und ansonsten "0" setzt und das Ergebnis zurück in die Speichereinheit schreibt;
die Vorrichtung, gemäß der Vektor gleich Entscheidung Anweisung (VEQ), jeweils Vektordaten einer spezifizierten Größe von spezifizierten Adressen der Speichereinheit abruft, zwei Vektordaten kontrapunktisch in der Vektoroperationseinheit vergleicht, dann "1" in der jeweiligen Position in einem Ausgangsvektor setzt, wenn der vorherige ein Äquivalent des späteren ist, und ansonsten "0" setzt, und das Ergebnis zurück in die Speichereinheit schreibt;
die Vorrichtung, gemäß der Vektor Inverter Anweisung (VINV), Vektordaten einer spezifizierten Größe von einer spezifizierten Adresse der Speichereinheit abruft, bitweise eine NOT Operation an dem Vektor durchführt und das Ergebnis zurück in die Speichereinheit schreibt;
die Vorrichtung, gemäß der Vektor Merger Anweisung (VMER), jeweils Vektordaten einer spezifizierten Größe von spezifizierten Adressen der Speichereinheit abruft, einschließlich eines Auswahlvektors und eines ausgewählten Vektors I und eines ausgewählten Vektors II in Übereinstimmung damit, ob ein Element des Auswahlvektors "1" oder "0" ist, wobei die Vektoroperationseinheit von dem ausgewählten Vektor I oder dem ausgewählten Vektor II ein entsprechendes Element als ein Element in einer entsprechenden Position in einem Ausgabevektor auswählt, und das Ergebnis zurück in die Speichereinheit schreibt;
die Vorrichtung, gemäß der Vektor Maximum Anweisung (VMAX), Vektordaten einer spezifizierten Größe von einer spezifizierten Adresse der Speichereinheit abruft, das Maximum-Element daraus als ein Ergebnis auswählt und das Ergebnis zurück in die Registereinheit schreibt;
die Vorrichtung, gemäß der Skalar zu Vektor Anweisung (STV), Skalardaten von einer spezifizierten Adresse der Registereinheit abruft, den Skalar erweitert, so dass er ein Vektor einer spezifizierten Länge in der Vektoroperationseinheit ist, und das Ergebnis zurück in die Registereinheit schreibt;
die Vorrichtung, gemäß der Skalar zu Vektor Pos N Anweisung (STVPN) einen Skalar von einer spezifizierten Adresse der Registereinheit und Vektordaten einer spezifizierten Größe von einer spezifizierten Adresse der Speichereinheit abruft, ein Element in einer spezifizierten Position des Vektors durch den Skalarwert in der Vektoroperationseinheit ersetzt und das Ergebnis zurück in die Speichereinheit schreibt;
die Vorrichtung, gemäß der Vektor Pos N zu Skalar Anweisung (VPNTS), einen Skalar von einer spezifizierten Adresse der Registereinheit und Vektordaten einer spezifizierten Größe von einer spezifizierten Adresse der Speichereinheit abruft, den Skalarwert durch ein Element in einer spezifizierten Position des Vektors in der Vektoroperationseinheit ersetzt und das Ergebnis zurück in die Registereinheit schreibt;
die Vorrichtung, gemäß der Vektorabrufanweisung (VR), Vektordaten einer spezifizierten Größe von einer spezifizierten Adresse der Speichereinheit abruft, ein entsprechendes Element des Vektors gemäß einer spezifizierten Position in der Vektoroperationseinheit als Ausgabe erhält und das Ergebnis zurück in die Registereinheit schreibt;
die Vorrichtung, gemäß der Vektor Dot-Produkt Anweisung (VP), Vektordaten einer spezifizierten Größe von spezifizierten Adressen der Speichereinheit abruft, eine Dot-Produkt-Operation für die beiden Vektoren in der Vektoroperationseinheit durchführt und das Ergebnis zurück in die Registereinheit schreibt;
die Vorrichtung, gemäß der Zufallsvektor Anweisung (RV), einen Zufallsvektor generiert, der einheitliche Verteilung im Bereich von 0 bis 1 in der Vektoroperationseinheit erfüllt und das Ergebnis zurück in die Speichereinheit schreibt;
die Vorrichtung, gemäß der Vektor zyklische Verschiebung Anweisung (VCS), Vektordaten einer spezifizierten Größe von einer spezifizierten Adresse der Speichereinheit abruft, eine zyklische Verschiebungsoperation für den Vektor in Übereinstimmung mit einer spezifizierten Schrittgröße in der Vektoroperationseinheit durchführt und das Ergebnis zurück in die Speichereinheit schreibt;
die Vorrichtung, gemäß der Vektor Lade Anweisung (VLOAD), Vektordaten einer spezifizierten Größe von einer spezifizierten externen Quelladresse in die Speichereinheit lädt;
die Vorrichtung, gemäß der Vektor Speicher Anweisung (VS), Vektordaten einer spezifizierten Größe von einer spezifizierten Adresse der Speichereinheit in einer externen Zieladresse speichert; und
die Vorrichtung, gemäß der Vektor Bewegung Anweisung (VMOVE), Vektordaten einer spezifizierten Größe von einer spezifizierten Adresse der Speichereinheit zu einer anderen spezifizierten Adresse der Speichereinheit speichert.

14. Verfahren zum Ausführen einer Vektoroperation in Übereinstimmung mit einer Vektoroperationsanweisung, umfassend:
Speichern von Vektoren in einer Speichereinheit;
Speichern von Vektoradressen und Skalardaten in einer Registereinheit, wobei die Vektoradressen die Adressen sind, an denen Vektoren in der Speichereinheit gespeichert sind, wobei die Registereinheit eine Skalarregisterdatei ist;
Durchführen, durch eine Vektoroperationseinheit, von:
Erfassen der Vektoroperationsanweisung, Erhalten einer Vektoradresse von der Registereinheit gemäß der Vektoroperationsanweisung und dann Erhalten eines entsprechenden Vektors von der Speichereinheit gemäß der Vektoradresse, anschließendes Durchführen einer Vektoroperation gemäß dem erfassten Vektor, um ein Vektoroperationsergebnis zu erhalten;
**dadurch gekennzeichnet, dass**
die Vektoroperationsanweisung einen Operationscode und mindestens ein erstes Operationsfeld und ein zweites Operationsfeld enthält, wobei der Operationscode zur Angabe einer Funktion der Vektoroperationsanweisung verwendet wird und das erste und das zweite Operationsfeld zur Angabe von Dateninformationen der Vektoroperationsanweisung verwendet werden;
wobei die Dateninformationen eine Skalarregisternummer ist;
wobei das Verfahren umfasst:
die Vektoroperationseinheit erhält eine Vektorstartadresse von einem ersten Skalarregister der Registereinheit, die Dateninformationen des ersten Operationsfeldes entspricht, und
eine Vektorlänge von einem zweiten Skalarregister der Registereinheit, die Dateninformationen des zweiten Operationsfeldes entspricht, und
Erhalten des Vektors, der an der entsprechenden Adresse gespeichert ist, von der Speichereinheit gemäß der Vektorstartadresse und der Vektorlänge.

15. Verfahren nach Anspruch 14, wobei das Verfahren umfasst:
Abrufen der Vektoroperationsanweisung durch eine Anweisungsverarbeitungseinheit (S1) und
Durchführen der Vektoroperation an dem erfassten Vektor gemäß der Vektoroperationsanweisung, um ein Vektoroperationsergebnis zu erhalten, und Speichern des Vektoroperationsergebnisses in der Speichereinheit.

16. Verfahren nach Anspruch 14 oder 15, wobei die Vektoroperationsanweisung eine oder eine beliebige Kombination der folgenden Anweisungen enthält: Vektoradditionsanweisung (VA), Vektor addiert zu Skalar Anweisung (VAS), Vektorsubtraktionsanweisung (VS), Skalar subtrahierter Vektor Anweisung (SSV), Vektor multipliziert mit Vektor Anweisung (VMV), Vektor multipliziert mit Skalaranweisung (VMS), Vektordivision Anweisung (VD), Skalar dividiert durch Vektor Anweisung (SDV), Vektor UND Vektor Anweisung (VAV), Vektor UND Anweisung (VAND), Vektor ODER Vektor Anweisung (VOV), Vektor ODER Anweisung (VOR), Vektor Exponent Anweisung (VE), Vektor Logarithmus Anweisung (VL), Vektor größer als Anweisung (VGT), Vektor gleich Entscheidung Anweisung (VEQ), Vektor Inverter Anweisung (VINV), Vektor Merger Anweisung (VMER), Vektor Maximum Anweisung (VMAX), Skalar zu Vektor Anweisung (STV), Skalar zu Vektor Pos N Anweisung (STVPN), Vektor Pos N zu Skalar Anweisung (VPNTS), Vektor Abruf Anweisung (VR), Vektor Dot-Produkt Anweisung (VP), Zufallsvektor Anweisung (RV), Vektor zyklische Verschiebung Anweisung (VCS), Vektor Lade Anweisung (VLOAD), Vektor Speicher Anweisung (VS), Vektor Bewegungs Anweisung (VMOVE).

17. Verfahren nach Anspruch 16, wobei das Verfahren ferner umfasst:
gemäß der Vektoradditionsanweisung (VA), jeweiliges Abrufen von zwei Blöcken von Vektordaten einer spezifizierten Größe von spezifizierten Adressen der Speichereinheit, um eine Additionsoperation in der Vorrichtung für Vektoroperationen durchzuführen, und Zurückschreiben des Ergebnisses in die Speichereinheit;
gemäß der Vektor addiert zu Skalar Anweisung (VAS), Abrufen von Vektordaten einer spezifizierten Größe von einer spezifizierten Adresse der Speichereinheit und von Skalardaten von einer spezifizierten Adresse der Registereinheit, Addieren des Skalarwerts zu jedem Element des Vektors in einer Skalaroperationseinheit und Zurückschreiben des Ergebnisses in die Speichereinheit;
gemäß der Vektor Subtraktion Anweisung (VS), jeweiliges Abrufen von zwei Blöcken
von Vektordaten einer spezifizierten Größe von spezifizierten Adressen der Speichereinheit, Durchführen einer Subtraktionsoperation in der Vektoroperationseinheit und Zurückschreiben des Ergebnisses in die Speichereinheit;
gemäß der Skalar subtrahierter Vektor Anweisung (SSV), Abrufen von Skalardaten von einer spezifizierten Adresse der Registereinheit und von Vektordaten von einer spezifizierten Adresse der Speichereinheit, Subtrahieren des entsprechende Elements des Vektors von dem Skalar in der Vektoroperationseinheit und Zurückschreiben des Ergebnisses in die Speichereinheit;
gemäß der Vektor multipliziert mit Vektor Anweisung (VMV), jeweiliges Abrufen von Vektordaten einer spezifizierten Größe von spezifizierten Adressen der Speichereinheit, Durchführen einer Vektormultiplikationsoperation in der Vektoroperationseinheit und Zurückschreiben des Ergebnisses in die Speichereinheit;
gemäß der Vektor multipliziert mit Skalar Anweisung (VMS), Abrufen von Vektordaten einer spezifizierten Größe von einer spezifizierten Adresse der Speichereinheit und von Skalardaten einer spezifizierten Größe von einer spezifizierten Adresse der Registereinheit, Durchführen einer Vektor multipliziert mit Skalar Operation in der Vektorregistereinheit und Zurückschreiben des Ergebnisses in die Speichereinheit;
gemäß der Vektordivisionsanweisung (VD), jeweiliges Abrufen von Vektordaten einer spezifizierten Größe von spezifizierten Adressen der Speichereinheit, Durchführen einer Vektordivisionsoperation in der Vektoroperationseinheit und Zurückschreiben des Ergebnisses in die Speichereinheit;
gemäß der Skalar dividiert durch Vektor Anweisung (SDV), Abrufen von Skalardaten von einer spezifizierten Adresse der Registereinheit und von Vektordaten einer spezifizierten Größe von einer spezifizierten Adresse der Speichereinheit und Dividieren des Skalars durch das jeweilige Element des Vektors in der Vektoroperationseinheit und Zurückschreiben des Ergebnisses in die Speichereinheit;
gemäß der Vektor UND Vektor Anweisung (VAV), jeweiliges Abrufen von Vektordaten einer spezifizierten Größe von spezifizierten Adressen der Speichereinheit, Durchführen einer kontrapunktischen UND Operation an den beiden Vektoren in der Vektoroperationseinheit und Zurückschreiben des Ergebnisses in die Speichereinheit;
gemäß der Vektor UND Anweisung (VAND), Abrufen von Vektordaten einer spezifizierten Größe von einer spezifizierten Adresse der Speichereinheit, Durchführen von UND Operationen an jedem Bit des Vektors in der Vektoroperationseinheit und Zurückschreiben des Ergebnisses in die Registereinheit;
gemäß der Vektor ODER Vektor Anweisung (VOV), jeweiliges Abrufen Vektordaten einer spezifizierten Größe von spezifizierten Adressen der Speichereinheit, Durchführen einer kontrapunktischen ODER Operation an den beiden Vektoren in der Vektoroperationseinheit und Zurückschreiben des Ergebnisses in die Speichereinheit;
gemäß der Vektor ODER Anweisung (VOR), Abrufen von Vektordaten einer spezifizierten Größe von einer spezifizierten Adresse der Speichereinheit, Durchführen von ODER Operationen an jedem Bit der Vektoren in der Vektoroperationseinheit und Zurückschreiben des Ergebnisses in die Registereinheit;
gemäß der Vektor Exponenten Anweisung (VE), Abrufen von Vektordaten einer spezifizierten Größe von einer spezifizierten Adresse der Speichereinheit, Durchführen von Exponentenoperationen für jedes Element des Vektors in der Vektoroperationseinheit und Zurückschreiben des Ergebnisses in die Speichereinheit;
gemäß der Vektor Logarithmus Anweisung (VL), Abrufen von Vektordaten einer spezifizierten Größe von einer spezifizierten Adresse der Speichereinheit, Durchführen einer Logarithmusoperation für jedes Element des Vektors in der Vektoroperationseinheit und Zurückschreiben des Ergebnisses in die Speichereinheit;
gemäß der Vektor größer als Anweisung (VGT), jeweiliges Abrufen von Vektordaten einer spezifizierten Größe von spezifizierten Adressen der Speichereinheit, kontrapunktisches Vergleichen von zwei Vektordaten in der Vektoroperationseinheit, dann Setzen von "1" in der jeweiligen Position in einem Ausgangsvektor, wenn der vorherige größer ist als der spätere, und ansonsten Setzen von "0", und Zurückschreiben des Ergebnisses in die Speichereinheit;
gemäß der Vektor gleich Entscheidung Anweisung (VEQ), jeweiliges Abrufen von Vektordaten einer spezifizierten Größe von spezifizierten Adressen der Speichereinheit, kontrapunktisches Vergleichen von zwei Vektordaten in der Vektoroperationseinheit, dann Setzen von "1" in der jeweiligen Position in einem Ausgangsvektor, wenn der vorherige ein Äquivalent des späteren ist, und ansonsten Setzen von "0" , und Zurückschreiben des Ergebnisses in die Speichereinheit;
gemäß der Vektor Inverter Anweisung (VINV), Abrufen von Vektordaten einer spezifizierten Größe von einer spezifizierten Adresse der Speichereinheit, bitweises Durchführen einer NOT Operation an dem Vektor und Zurückschreiben des Ergebnisses in die Speichereinheit;
gemäß der Vektor Merger Anweisung (VMER), jeweiliges Abrufen von Vektordaten einer spezifizierten Größe von spezifizierten Adressen der Speichereinheit, einschließlich eines Auswahlvektors und eines ausgewählten Vektors I und eines ausgewählten Vektors II in Übereinstimmung damit, ob ein Element des Auswahlvektors "1" oder "0" ist, wobei die Vektoroperationseinheit von dem ausgewählten Vektor I oder dem ausgewählten Vektor II ein entsprechendes Element als ein Element in einer entsprechenden Position in einem Ausgabevektor auswählt, und Zurückschreiben des Ergebnisses in die Speichereinheit;
gemäß der Vektor Maximum Anweisung (VMAX), Abrufen von Vektordaten einer spezifizierten Größe von einer spezifizierten Adresse der Speichereinheit, Auswählen des Maximum-Elements daraus als ein Ergebnis und Zurückschreiben des Ergebnisses in die Registereinheit;
gemäß der Skalar zu Vektor Anweisung (STV), Abrufen von Skalardaten von einer spezifizierten Adresse der Registereinheit, Erweitern des Skalars, so dass er ein Vektor einer spezifizierten Länge in der Vektoroperationseinheit ist, und Zurückschreiben des Ergebnisses in die Registereinheit;
gemäß der Skalar zu Vektor Pos N Anweisung (STVPN), Abrufen eines Skalars von einer spezifizierten Adresse der Registereinheit und von Vektordaten einer spezifizierten Größe von einer spezifizierten Adresse der Speichereinheit, Ersetzen eines Elements in einer spezifizierten Position des Vektors durch den Skalarwert in der Vektoroperationseinheit und Zurückschreiben des Ergebnisses in die Speichereinheit;
gemäß der Vektor Pos N zu Skalar Anweisung (VPNTS), Abrufen eines Skalars von einer spezifizierten Adresse der Registereinheit und von Vektordaten einer spezifizierten Größe von einer spezifizierten Adresse der Speichereinheit, Ersetzen des Skalarwerts durch ein Element in einer spezifizierten Position des Vektors in der Vektoroperationseinheit und Zurückschreiben des Ergebnisses in die Registereinheit;
gemäß der Vektorabrufanweisung (VR), Abrufen von Vektordaten einer spezifizierten Größe von einer spezifizierten Adresse der Speichereinheit, Erhalten eines entsprechenden Elements des Vektors gemäß einer spezifizierten Position in der Vektoroperationseinheit als Ausgabe und Zurückschreiben des Ergebnisses in die Registereinheit;
gemäß der Vektor Dot-Produkt Anweisung (VP), jeweiliges Abrufen von Vektordaten einer spezifizierten Größe von spezifizierten Adressen der Speichereinheit, Durchführen einer Dot-Produkt-Operation für die beiden Vektoren in der Vektoroperationseinheit und Zurückschreiben des Ergebnisses in die Registereinheit;
gemäß der Zufallsvektor Anweisung (RV), Generieren eines Zufallsvektors, der einheitliche Verteilung im Bereich von 0 bis 1 in der Vektoroperationseinheit erfüllt und Zurückschreiben des Ergebnisses in die Speichereinheit;
gemäß der Vektor zyklische Verschiebung Anweisung (VCS), Abrufen von Vektordaten einer spezifizierten Größe von einer spezifizierten Adresse der Speichereinheit, Durchführen einer zyklischen Verschiebungsoperation für den Vektor in Übereinstimmung mit einer spezifizierten Schrittgröße in der Vektoroperationseinheit und Zurückschreiben des Ergebnisses in die Speichereinheit;
gemäß der Vektor Lade Anweisung (VLOAD), Laden von Vektordaten einer spezifizierten Größe von einer spezifizierten externen Quelladresse in die Speichereinheit;
gemäß der Vektor Speicher Anweisung (VS), Speichern von Vektordaten einer spezifizierten Größe von einer spezifizierten Adresse der Speichereinheit zu einer externen Zieladresse; und
gemäß der Vektor Bewegung Anweisung (VMOVE), Speichern von Vektordaten einer spezifizierten Größe von einer spezifizierten Adresse der Speichereinheit zu einer anderen spezifizierten Adresse der Speichereinheit.

18. Verfahren nach einem der Ansprüche 14 bis 17, wobei die Speichereinheit ein Scratchpad-Speicher ist.

19. Verfahren nach Anspruch 15, wobei, nach Abrufen der Vektoroperationsanweisung, das Verfahren ferner umfasst:
Dekodieren, durch ein Dekodierungsmodul, der erfassten Vektoroperationsanweisung (S2); und Durchführen, durch eine Anweisungswarteschlange, eines sequenziellen Speicherns für die dekodierte Vektoroperationsanweisung.

20. Verfahren nach Anspruch 19, wobei, vor Erfassen der Vektoroperationsanweisung, das Verfahren ferner umfasst:
Bestimmen, ob die Vektoroperationsanweisung auf einen gleichen Vektor zugreift, wie eine vorherige Vektoroperationsanweisung: falls dem so ist, wird die Vektoroperationsanweisung der Vektoroperationseinheit nicht bereitgestellt bis die Ausführung der vorherigen Vektoroperationsanweisung abgeschlossen ist; ansonsten wird sie der Vektoroperationseinheit direkt bereitgestellt.

21. Verfahren nach Anspruch 20, wobei, wenn die Vektoroperationsanweisung auf den gleichen Vektor zugreift, wie die vorherige Vektoroperationsanweisung, Speichern der Vektoroperationsanweisung in einer Speicherwarteschlange erfolgt, und diese Vektoroperationsanweisung in der Speicherwarteschlange der Vektoroperationseinheit nicht bereitgestellt wird bis die Ausführung der vorherigen Vektoroperationsanweisung abgeschlossen ist (S4).

## Revendications

1. Dispositif d'opération vectorielle utilisé pour exécuter une opération vectorielle selon une instruction d'opération vectorielle, comprenant :
une unité de stockage pour stocker des vecteurs ;
une unité de registre pour stocker des adresses de vecteurs et des données scalaires, dans lequel des adresses de vecteurs sont les adresses auxquelles des vecteurs sont stockés dans l'unité de stockage, dans lequel l'unité de registre est un fichier de registre scalaire ; et
une unité d'opération vectorielle pour acquérir l'instruction d'opération vectorielle, obtenir une adresse de vecteur depuis l'unité de registre en fonction de l'instruction d'opération vectorielle, puis obtenir un vecteur correspondant depuis l'unité de stockage en fonction de l'adresse de vecteur, puis réaliser une opération vectorielle en fonction du vecteur acquis de manière à obtenir un résultat d'opération vectorielle ;
**caractérisé en ce que**
ladite instruction d'opération vectorielle inclut un code d'opération et au moins un premier champ d'opération et un deuxième champ d'opération, dans lequel le code d'opération est utilisé pour indiquer une fonction de l'instruction d'opération vectorielle, et les premier et deuxième champs d'opération sont utilisés pour indiquer des informations de données de l'instruction d'opération vectorielle ;
dans lequel les informations de données sont un numéro de registre scalaire ;
dans lequel l'unité d'opération vectorielle est configurée pour obtenir
une adresse de début de vecteur depuis un premier registre scalaire de l'unité de registre correspondant aux informations de données du premier champ d'opération et
une longueur de vecteur depuis un deuxième registre scalaire de l'unité de registre correspondant aux informations de données du deuxième champ d'opération, et
pour obtenir le vecteur stocké à l'adresse correspondante depuis l'unité de stockage en fonction de l'adresse de début de vecteur et de la longueur de vecteur.

2. Dispositif d'opération vectorielle selon la revendication 1, comprenant en outre :
une unité cache d'instruction pour stocker une instruction d'opération vectorielle à exécuter.

3. Dispositif d'opération vectorielle selon la revendication 2, comprenant en outre :
une unité de traitement d'instruction pour acquérir l'instruction d'opération vectorielle depuis l'unité cache d'instruction, traiter l'instruction d'opération vectorielle et la fournir à ladite unité d'opération vectorielle.

4. Dispositif d'opération vectorielle selon la revendication 3, dans lequel ladite unité de traitement d'instruction comprend :
un module d'extraction d'instruction pour acquérir l'instruction d'opération vectorielle depuis l'unité cache d'instruction ;
un module de décodage pour décoder l'instruction d'opération vectorielle acquise ; et
une file d'attente d'instructions pour réaliser un stockage séquentiel pour l'instruction d'opération vectorielle décodée.

5. Dispositif d'opération vectorielle selon la revendication 1, comprenant en outre :
une unité de traitement de relation de dépendance pour : avant que l'unité d'opération vectorielle n'acquiert l'instruction d'opération vectorielle, la détermination si l'instruction d'opération vectorielle accède au même vecteur qu'une instruction d'opération vectorielle précédente : si tel est le cas, l'instruction d'opération vectorielle n'est pas fournie à ladite unité d'opération vectorielle jusqu'à ce que l'exécution de l'instruction d'opération vectorielle précédente soit terminée ; sinon, l'instruction d'opération vectorielle est fournie directement à ladite unité d'opération vectorielle.

6. Dispositif d'opération vectorielle selon la revendication 5, dans lequel, lorsque l'instruction d'opération vectorielle accède au même vecteur que l'instruction d'opération vectorielle précédente, ladite unité de traitement de relation de dépendance stocke l'instruction d'opération vectorielle dans une file d'attente de stockage, et cette instruction d'opération vectorielle dans la file d'attente de stockage n'est pas fournie à ladite unité d'opération vectorielle jusqu'à ce que l'exécution de l'instruction d'opération vectorielle précédente soit terminée.

7. Dispositif d'opération vectorielle selon la revendication 1, dans lequel ladite unité de stockage est également utilisée pour stocker ledit résultat d'opération vectorielle.

8. Dispositif d'opération vectorielle selon la revendication 6, comprenant en outre :
une unité d'entrée-sortie pour stocker des vecteurs dans ladite unité de stockage ou pour acquérir le résultat d'opération vectorielle depuis ladite unité de stockage.

9. Dispositif d'opération vectorielle selon la revendication 6, dans lequel ladite unité de stockage est une mémoire de travail.

10. Dispositif d'opération vectorielle selon la revendication 1, dans lequel ladite unité d'opération vectorielle comprend un élément d'addition vectorielle, un élément de multiplication vectorielle, un élément de comparaison de valeurs, un élément d'opération non linéaire et un élément de multiplication vectorielle-scalaire.

11. Dispositif d'opération vectorielle selon la revendication 10, dans lequel ladite unité d'opération vectorielle est de la structure de pipeline à étages multiples, dans lequel l'élément d'addition vectorielle et l'élément de multiplication vectorielle sont agencés dans le premier étage de pipeline, l'élément de comparaison de valeurs est agencé dans le deuxième étage, et l'élément d'opération non linéaire et l'élément de multiplication vectorielle-scalaire sont agencés dans le troisième étage.

12. Dispositif d'opération vectorielle selon la revendication 1 ou 9, dans lequel ladite instruction d'opération vectorielle inclut une ou n'importe quelle combinaison des instructions suivantes : instruction d'addition vectorielle (VA), instruction de vecteur ajouté à scalaire (VAS), instruction de soustraction vectorielle (VS), instruction de vecteur soustrait à scalaire (SSV), instruction de vecteur multiplié par vecteur (VMV), instruction de vecteur multiplié par scalaire (VMS), instruction de division vectorielle (VD), instruction de scalaire divisé par vecteur (SDV), instruction de vecteur ET vecteur (VAV), instruction de vecteur ET (VAND), instruction de vecteur OU vecteur (VOV), instruction de vecteur OU (VOR), instruction d'exposant vectoriel (VE), instruction de logarithme vectoriel (VL), instruction de vecteur supérieur à (VGT), instruction de décision de vecteur égal (VEQ), instruction d'inverseur vectoriel (VINV), instruction de fusion vectorielle (VMER), instruction de maximum vectoriel (VMAX), instruction de scalaire à vecteur (STV), instruction de scalaire à vecteur position N (STVPN), instruction de vecteur position N à scalaire (VPNTS), instruction de récupération vectorielle (VR), instruction de produit de points vectoriels (VP), instruction de vecteur aléatoire (RV), instruction de déplacement cyclique vectoriel (VCS), instruction de charge vectorielle (VLOAD), instruction de stockage vectoriel (VS), instruction de mouvement vectoriel (VMOVE).

13. Dispositif d'opération vectorielle selon la revendication 12, dans lequel
selon ladite instruction d'addition vectorielle (VA), le dispositif récupère respectivement deux blocs de données vectorielles d'une taille spécifiée depuis des adresses spécifiées de ladite unité de stockage pour réaliser une opération d'addition dans l'unité d'opération vectorielle, et écrit le résultat dans ladite unité de stockage ;
selon ladite instruction de vecteur ajouté à scalaire (VAS), le dispositif récupère des données vectorielles d'une taille spécifiée depuis une adresse spécifiée de ladite unité de stockage et des données scalaires depuis une adresse spécifiée de ladite unité de registre, ajoute la valeur scalaire à chaque élément de vecteur dans une unité d'opération scalaire, et écrit le résultat dans ladite unité de stockage ;
selon ladite instruction de soustraction vectorielle (VS), le dispositif récupère respectivement deux blocs de données vectorielles d'une taille spécifiée depuis des adresses spécifiées de ladite unité de stockage, réalise une opération de soustraction dans l'unité d'opération vectorielle, et écrit le résultat dans ladite unité de stockage ;
selon ladite instruction de vecteur soustrait à scalaire (SSV), le dispositif récupère des données scalaires depuis une adresse spécifiée de ladite unité de registre et des données vectorielles depuis une adresse spécifiée de ladite unité de stockage, soustrait l'élément correspondant du vecteur au scalaire dans l'unité d'opération vectorielle, et écrit le résultat dans ladite unité de stockage ;
selon ladite instruction de vecteur multiplié par vecteur (VMV), le dispositif récupère respectivement des données vectorielles d'une taille spécifiée depuis des adresses spécifiées de ladite unité de stockage, réalise une opération de multiplication vectorielle dans l'unité d'opération vectorielle, et écrit le résultat dans ladite unité de stockage ;
selon ladite instruction de vecteur multiplié par scalaire (VMS), le dispositif récupère des données vectorielles d'une taille spécifiée depuis une adresse spécifiée de ladite unité de stockage et des données scalaires d'une taille spécifiée depuis une adresse spécifiée de ladite unité de registre, réalise une opération de vecteur multiplié par scalaire dans l'unité de registre vectoriel, et écrit le résultat dans ladite unité de stockage ;
selon ladite instruction de division vectorielle (VD), le dispositif récupère respectivement des données vectorielles d'une taille spécifiée depuis des adresses spécifiées de ladite unité de stockage, réalise une opération de division vectorielle dans l'unité d'opération vectorielle, et écrit le résultat dans ladite unité de stockage ;
selon ladite instruction de scalaire divisé par vecteur (SDV), le dispositif récupère des données scalaires depuis une adresse spécifiée de ladite unité de registre et des données vectorielles d'une taille spécifiée depuis une adresse spécifiée de ladite unité de stockage, et divise le scalaire par l'élément respectif du vecteur dans l'unité d'opération vectorielle, et écrit le résultat dans ladite unité de stockage ;
selon ladite instruction de vecteur ET vecteur (VAV), le dispositif récupère respectivement des données vectorielles d'une taille spécifiée depuis des adresses spécifiées de ladite unité de stockage, réalise une opération ET contrapuntique sur les deux vecteurs dans l'unité d'opération vectorielle, et écrit le résultat dans ladite unité de stockage ;
selon ladite instruction de vecteur ET (VAND), le dispositif récupère des données vectorielles d'une taille spécifiée depuis une adresse spécifiée de ladite unité de stockage, réalise des opérations ET sur chaque bit du vecteur dans l'unité d'opération vectorielle, et écrit le résultat dans ladite unité de registre ;
selon ladite instruction de vecteur OU vecteur (VOV), le dispositif récupère respectivement des données vectorielles d'une taille spécifiée depuis des adresses spécifiées de ladite unité de stockage, réalise une opération OU contrapuntique sur les deux vecteurs dans l'unité d'opération vectorielle, et écrit le résultat dans ladite unité de stockage ;
selon ladite instruction de vecteur OU (VOR), le dispositif récupère des données vectorielles d'une taille spécifiée depuis une adresse spécifiée de ladite unité de stockage, réalise des opérations OU sur chaque bit des vecteurs dans l'unité d'opération vectorielle, et écrit le résultat dans ladite unité de registre ;
selon ladite instruction d'exposant vectoriel (VE), le dispositif récupère des données vectorielles d'une taille spécifiée depuis une adresse spécifiée de ladite unité de stockage, réalise une opération d'exposant pour chaque élément du vecteur dans l'unité d'opération vectorielle, et écrit le résultat dans ladite unité de stockage ;
selon ladite instruction de logarithme vectoriel (VL), le dispositif récupère des données vectorielles d'une taille spécifiée depuis une adresse spécifiée de ladite unité de stockage, réalise une opération de logarithme pour chaque élément du vecteur dans l'unité d'opération vectorielle, et écrit le résultat dans ladite unité de stockage ;
selon ladite instruction de vecteur supérieur à (VGT), le dispositif récupère respectivement des données vectorielles d'une taille spécifiée depuis des adresses spécifiées de ladite unité de stockage, compare de manière contrapuntique deux données vectorielles dans l'unité d'opération vectorielle, puis place « 1 » à la position respective dans un vecteur de sortie si la première est supérieure à la deuxième, sinon place « 0 », et écrit le résultat dans ladite unité de stockage ;
selon ladite instruction de décision de vecteur égal (VEQ), le dispositif récupère respectivement des données vectorielles d'une taille spécifiée depuis des adresses spécifiées de ladite unité de stockage, compare de manière contrapuntique deux données vectorielles dans l'unité d'opération vectorielle, puis place « 1 » à la position respective dans un vecteur de sortie si la première est équivalente à la deuxième, sinon place « 0 », et écrit le résultat dans ladite unité de stockage ;
selon ladite instruction d'inverseur vectoriel (VINV), le dispositif récupère des données vectorielles d'une taille spécifiée depuis une adresse spécifiée de ladite unité de stockage, réalise une opération NON sur le vecteur bit par bit, et écrit le résultat dans ladite unité de stockage ;
selon ladite instruction de fusion vectorielle (VMER), le dispositif récupère respectivement des données vectorielles d'une taille spécifiée depuis des adresses spécifiées de ladite unité de stockage, incluant un vecteur de sélection et un vecteur sélectionné I et un vecteur sélectionné II selon qu'un élément du vecteur de sélection est « 1 » ou « 0 », l'unité d'opération vectorielle sélectionne à partir du vecteur sélectionné I ou du vecteur sélectionné II un élément correspondant en tant qu'un élément à une position correspondante dans un vecteur de sortie, et écrit le résultat dans ladite unité de stockage ;
selon ladite instruction de maximum vectoriel (VMAX), le dispositif récupère des données vectorielles d'une taille spécifiée depuis une adresse spécifiée de ladite unité de stockage, sélectionne l'élément maximal parmi celles-ci en tant qu'un résultat, et écrit le résultat dans ladite unité de registre ;
selon ladite instruction de scalaire à vecteur (STV), le dispositif récupère des données scalaires depuis une adresse spécifiée de ladite unité de registre, étend le scalaire pour être un vecteur d'une longueur spécifiée dans l'unité d'opération vectorielle, et écrit le résultat dans ladite unité de registre ;
selon ladite instruction de scalaire à vecteur position N (STVPN), le dispositif récupère un scalaire depuis une adresse spécifiée de ladite unité de registre et des données vectorielles d'une taille spécifiée depuis une adresse spécifiée de ladite unité de stockage, remplace un élément à une position spécifiée du vecteur par la valeur scalaire dans l'unité d'opération vectorielle, et écrit le résultat dans ladite unité de stockage ;
selon ladite instruction de vecteur position N à scalaire (VPNTS), le dispositif récupère un scalaire depuis une adresse spécifiée de ladite unité de registre et des données vectorielles d'une taille spécifiée depuis une adresse spécifiée de ladite unité de stockage, remplace la valeur scalaire par un élément à une position spécifiée du vecteur dans l'unité d'opération vectorielle, et écrit le résultat dans ladite unité de registre ;
selon ladite instruction de récupération vectorielle (VR), le dispositif récupère des données vectorielles d'une taille spécifiée depuis une adresse spécifiée de ladite unité de stockage, obtient un élément correspondant du vecteur en fonction d'une position spécifiée dans l'unité d'opération vectorielle en tant qu'une sortie, et écrit le résultat dans ladite unité de registre ;
selon ladite instruction de produit de points vectoriels (VP), le dispositif récupère respectivement des données vectorielles d'une taille spécifiée depuis des adresses spécifiées de ladite unité de stockage, réalise une opération de produit de points pour les deux vecteurs dans l'unité d'opération vectorielle, et écrit le résultat dans ladite unité de registre ;
selon ladite instruction de vecteur aléatoire (RV), le dispositif génère un vecteur aléatoire satisfaisant une répartition uniforme dans une plage de 0 à 1 dans l'unité d'opération vectorielle, et écrit le résultat dans ladite unité de stockage ;
selon ladite instruction de déplacement cyclique vectoriel (VCS), le dispositif récupère des données vectorielles d'une taille spécifiée depuis une adresse spécifiée de ladite unité de stockage, réalise une opération de déplacement cyclique pour le vecteur en fonction d'une taille de pas spécifiée dans l'unité d'opération vectorielle, et écrit le résultat dans ladite unité de stockage ;
selon ladite instruction de charge vectorielle (VLOAD), le dispositif charge des données vectorielles d'une taille spécifiée depuis une adresse de source externe spécifiée dans ladite unité de stockage ;
selon ladite instruction de stockage vectoriel (VS), le dispositif stocke des données vectorielles d'une taille spécifiée depuis une adresse spécifiée de ladite unité de stockage à une adresse de destination externe ; et
selon ladite instruction de mouvement vectoriel (VMOVE), le dispositif stocke des données vectorielles d'une taille spécifiée depuis une adresse spécifiée de ladite unité de stockage à une autre adresse spécifiée de ladite unité de stockage.

14. Procédé d'exécution d'une opération vectorielle selon une instruction d'opération vectorielle, comprenant :
le stockage de vecteurs dans une unité de stockage ;
le stockage d'adresses de vecteurs et de données scalaires dans une unité de registre, dans lequel lesdites adresses de vecteurs sont les adresses auxquelles lesdits vecteurs sont stockés dans l'unité de stockage, dans lequel l'unité de registre est un fichier de registre scalaire ; et
la réalisation, par une unité d'opération vectorielle, de : l'acquisition de l'instruction d'opération vectorielle, l'obtention d'une adresse de vecteur depuis l'unité de registre en fonction de l'instruction d'opération vectorielle, puis l'obtention d'un vecteur correspondant depuis l'unité de stockage en fonction de l'adresse de vecteur, puis la réalisation d'une opération vectorielle en fonction du vecteur acquis de manière à obtenir un résultat d'opération vectorielle ;
**caractérisé en ce que**
ladite instruction d'opération vectorielle inclut un code d'opération et au moins un premier champ d'opération et un deuxième champ d'opération, dans lequel le code d'opération est utilisé pour indiquer une fonction de l'instruction d'opération vectorielle, et les premier et deuxième champs d'opération sont utilisés pour indiquer des informations de données de l'instruction d'opération vectorielle ;
dans lequel les informations de données sont un numéro de registre scalaire ;
le procédé comprenant :
par l'unité d'opération vectorielle, l'obtention
d'une adresse de début de vecteur depuis un premier registre scalaire de l'unité de registre correspondant aux informations de données du premier champ d'opération et
d'une longueur de vecteur depuis un deuxième registre scalaire de l'unité de registre correspondant aux informations de données du deuxième champ d'opération, et
l'obtention du vecteur stocké à l'adresse correspondante depuis l'unité de stockage en fonction de l'adresse de début de vecteur et de la longueur de vecteur.

15. Procédé selon la revendication 14, le procédé comprenant :
l'extraction de ladite instruction d'opération vectorielle par une unité de traitement d'instruction (S1), et
la réalisation de l'opération vectorielle sur le vecteur acquis en fonction de ladite instruction d'opération vectorielle de manière à obtenir un résultat d'opération vectorielle, et le stockage dudit résultat d'opération vectorielle dans ladite unité de stockage.

16. Procédé selon la revendication 14 ou 15, dans lequel ladite instruction d'opération vectorielle inclut une ou n'importe quelle combinaison des instructions suivantes : instruction d'addition vectorielle (VA), instruction de vecteur ajouté à scalaire (VAS), instruction de soustraction vectorielle (VS), instruction de vecteur soustrait à scalaire (SSV), instruction de vecteur multiplié par vecteur (VMV), instruction de vecteur multiplié par scalaire (VMS), instruction de division vectorielle (VD), instruction de scalaire divisé par vecteur (SDV), instruction de vecteur ET vecteur (VAV), instruction de vecteur ET (VAND), instruction de vecteur OU vecteur (VOV), instruction de vecteur OU (VOR), instruction d'exposant vectoriel (VE), instruction de logarithme vectoriel (VL), instruction de vecteur supérieur à (VGT), instruction de décision de vecteur égal (VEQ), instruction d'inverseur vectoriel (VINV), instruction de fusion vectorielle (VMER), instruction de maximum vectoriel (VMAX), instruction de scalaire à vecteur (STV), instruction de scalaire à vecteur position N (STVPN), instruction de vecteur position N à scalaire (VPNTS), instruction de récupération vectorielle (VR), instruction de produit de points vectoriels (VP), instruction de vecteur aléatoire (RV), instruction de déplacement cyclique vectoriel (VCS), instruction de charge vectorielle (VLOAD), instruction de stockage vectoriel (VS), instruction de mouvement vectoriel (VMOVE).

17. Procédé selon la revendication 16, le procédé comprenant en outre :
selon ladite instruction d'addition vectorielle (VA), la récupération respectivement de deux blocs de données vectorielles d'une taille spécifiée depuis des adresses spécifiées de ladite unité de stockage pour réaliser une opération d'addition dans l'unité d'opération vectorielle, et l'écriture du résultat dans ladite unité de stockage ;
selon ladite instruction de vecteur ajouté à scalaire (VAS), la récupération de données vectorielles d'une taille spécifiée depuis une adresse spécifiée de ladite unité de stockage et de données scalaires depuis une adresse spécifiée de ladite unité de registre, l'ajout de la valeur scalaire à chaque élément de vecteur dans une unité d'opération scalaire, et l'écriture du résultat dans ladite unité de stockage ;
selon ladite instruction de soustraction vectorielle (VS), la récupération respectivement de deux blocs de données vectorielles d'une taille spécifiée depuis des adresses spécifiées de ladite unité de stockage, la réalisation d'une opération de soustraction dans l'unité d'opération vectorielle, et l'écriture du résultat dans ladite unité de stockage ;
selon ladite instruction de vecteur soustrait à scalaire (SSV), la récupération de données scalaires depuis une adresse spécifiée de ladite unité de registre et de données vectorielles depuis une adresse spécifiée de ladite unité de stockage, la soustraction de l'élément correspondant du vecteur au scalaire dans l'unité d'opération vectorielle, et l'écriture du résultat dans ladite unité de stockage ;
selon ladite instruction de vecteur multiplié par vecteur (VMV), la récupération respectivement de données vectorielles d'une taille spécifiée depuis des adresses spécifiées de ladite unité de stockage, la réalisation d'une opération de multiplication vectorielle dans l'unité d'opération vectorielle, et l'écriture du résultat dans ladite unité de stockage ;
selon ladite instruction de vecteur multiplié par scalaire (VMS), la récupération de données vectorielles d'une taille spécifiée depuis une adresse spécifiée de ladite unité de stockage et de données scalaires d'une taille spécifiée depuis une adresse spécifiée de ladite unité de registre, la réalisation d'une opération de vecteur multiplié par scalaire dans l'unité de registre vectoriel, et l'écriture du résultat dans ladite unité de stockage ;
selon ladite instruction de division vectorielle (VD), la récupération respectivement de données vectorielles d'une taille spécifiée depuis des adresses spécifiées de ladite unité de stockage, la réalisation d'une opération de division vectorielle dans l'unité d'opération vectorielle, et l'écriture du résultat dans ladite unité de stockage ;
selon ladite instruction de scalaire divisé par vecteur (SDV), la récupération de données scalaires depuis une adresse spécifiée de ladite unité de registre et de données vectorielles d'une taille spécifiée depuis une adresse spécifiée de ladite unité de stockage, et la division du scalaire par l'élément respectif du vecteur dans l'unité d'opération vectorielle, et l'écriture du résultat dans ladite unité de stockage ;
selon ladite instruction de vecteur ET vecteur (VAV), la récupération respectivement de données vectorielles d'une taille spécifiée depuis des adresses spécifiées de ladite unité de stockage, la réalisation d'une opération ET contrapuntique sur les deux vecteurs dans l'unité d'opération vectorielle, et l'écriture du résultat dans ladite unité de stockage ;
selon ladite instruction de vecteur ET (VAND), la récupération de données vectorielles d'une taille spécifiée depuis une adresse spécifiée de ladite unité de stockage, la réalisation d'opérations ET sur chaque bit du vecteur dans l'unité d'opération vectorielle, et l'écriture du résultat dans ladite unité de registre ;
selon ladite instruction de vecteur OU vecteur (VOV), la récupération respectivement de données vectorielles d'une taille spécifiée depuis des adresses spécifiées de ladite unité de stockage, la réalisation d'une opération OU contrapuntique sur les deux vecteurs dans l'unité d'opération vectorielle, et l'écriture du résultat dans ladite unité de stockage ;
selon ladite instruction de vecteur OU (VOR), la récupération de données vectorielles d'une taille spécifiée depuis une adresse spécifiée de ladite unité de stockage, la réalisation d'opérations OU sur chaque bit des vecteurs dans l'unité d'opération vectorielle, et l'écriture du résultat dans ladite unité de registre ;
selon ladite instruction d'exposant vectoriel (VE), la récupération de données vectorielles d'une taille spécifiée depuis une adresse spécifiée de ladite unité de stockage, la réalisation d'une opération d'exposant pour chaque élément du vecteur dans l'unité d'opération vectorielle, et l'écriture du résultat dans ladite unité de stockage ;
selon ladite instruction de logarithme vectoriel (VL), la récupération de données vectorielles d'une taille spécifiée depuis une adresse spécifiée de ladite unité de stockage, la réalisation d'une opération de logarithme pour chaque élément du vecteur dans l'unité d'opération vectorielle, et l'écriture du résultat dans ladite unité de stockage ;
selon ladite instruction de vecteur supérieur à (VGT), la récupération respectivement de données vectorielles d'une taille spécifiée depuis des adresses spécifiées de ladite unité de stockage, la comparaison de manière contrapuntique de deux données vectorielles dans l'unité d'opération vectorielle, puis le placement de « 1 » à la position respective dans un vecteur de sortie si la première est supérieure à la deuxième, sinon le placement de « 0 », et l'écriture du résultat dans ladite unité de stockage ;
selon ladite instruction de décision de vecteur égal (VEQ), la récupération respectivement de données vectorielles d'une taille spécifiée depuis des adresses spécifiées de ladite unité de stockage, la comparaison de manière contrapuntique de deux données vectorielles dans l'unité d'opération vectorielle, puis le placement de « 1 » à la position respective dans un vecteur de sortie si la première est équivalente à la deuxième, sinon le placement de « 0 », et l'écriture du résultat dans ladite unité de stockage ;
selon ladite instruction d'inverseur vectoriel (VINV), la récupération de données vectorielles d'une taille spécifiée depuis une adresse spécifiée de ladite unité de stockage, la réalisation d'une opération NON sur le vecteur bit par bit, et l'écriture du résultat dans ladite unité de stockage ;
selon ladite instruction de fusion vectorielle (VMER), la récupération respectivement de données vectorielles d'une taille spécifiée depuis des adresses spécifiées de ladite unité de stockage, incluant un vecteur de sélection et un vecteur sélectionné I et un vecteur sélectionné II selon qu'un élément du vecteur de sélection est « 1 » ou « 0 », la sélection, par l'unité d'opération vectorielle, à partir du vecteur sélectionné I ou du vecteur sélectionné II, d'un élément correspondant en tant qu'un élément à une position correspondante dans un vecteur de sortie, et l'écriture du résultat dans ladite unité de stockage ;
selon ladite instruction de maximum vectoriel (VMAX), la récupération de données vectorielles d'une taille spécifiée depuis une adresse spécifiée de ladite unité de stockage, la sélection de l'élément maximal parmi celles-ci en tant qu'un résultat, et l'écriture du résultat dans ladite unité de registre ;
selon ladite instruction de scalaire à vecteur (STV), la récupération de données scalaires depuis une adresse spécifiée de ladite unité de registre, l'extension du scalaire pour être un vecteur d'une longueur spécifiée dans l'unité d'opération vectorielle, et l'écriture du résultat dans ladite unité de registre ;
selon ladite instruction de scalaire à vecteur position N (STVPN), la récupération d'un scalaire depuis une adresse spécifiée de ladite unité de registre et de données vectorielles d'une taille spécifiée depuis une adresse spécifiée de ladite unité de stockage, le remplacement d'un élément à une position spécifiée du vecteur par la valeur scalaire dans l'unité d'opération vectorielle, et l'écriture du résultat dans ladite unité de stockage ;
selon ladite instruction de vecteur position N à scalaire (VPNTS), la récupération d'un scalaire depuis une adresse spécifiée de ladite unité de registre et de données vectorielles d'une taille spécifiée depuis une adresse spécifiée de ladite unité de stockage, le remplacement de la valeur scalaire par un élément à une position spécifiée du vecteur dans l'unité d'opération vectorielle, et l'écriture du résultat dans ladite unité de registre ;
selon ladite instruction de récupération vectorielle (VR), la récupération de données vectorielles d'une taille spécifiée depuis une adresse spécifiée de ladite unité de stockage, l'obtention d'un élément correspondant du vecteur en fonction d'une position spécifiée dans l'unité d'opération vectorielle en tant qu'une sortie, et l'écriture du résultat dans ladite unité de registre ;
selon ladite instruction de produit de points vectoriels (VP), la récupération respectivement de données vectorielles d'une taille spécifiée depuis des adresses spécifiées de ladite unité de stockage, la réalisation d'une opération de produit de points pour les deux vecteurs dans l'unité d'opération vectorielle, et l'écriture du résultat dans ladite unité de registre ;
selon ladite instruction de vecteur aléatoire (RV), la génération d'un vecteur aléatoire satisfaisant une répartition uniforme dans une plage de 0 à 1 dans l'unité d'opération vectorielle, et l'écriture du résultat dans ladite unité de stockage ;
selon ladite instruction de déplacement cyclique vectoriel (VCS), la récupération de données vectorielles d'une taille spécifiée depuis une adresse spécifiée de ladite unité de stockage, la réalisation d'une opération de déplacement cyclique pour le vecteur en fonction d'une taille de pas spécifiée dans l'unité d'opération vectorielle, et l'écriture du résultat dans ladite unité de stockage ;
selon ladite instruction de charge vectorielle (VLOAD), le chargement de données vectorielles d'une taille spécifiée depuis une adresse de source externe spécifiée dans ladite unité de stockage ;
selon ladite instruction de stockage vectoriel (VS), le stockage de données vectorielles d'une taille spécifiée depuis une adresse spécifiée de ladite unité de stockage à une adresse de destination externe ; et
selon ladite instruction de mouvement vectoriel (VMOVE), le stockage de données vectorielles d'une taille spécifiée depuis une adresse spécifiée de ladite unité de stockage à une autre adresse spécifiée de ladite unité de stockage.

18. Procédé selon l'une quelconque des revendications 14 à 17, dans lequel ladite unité de stockage est une mémoire de travail.

19. Procédé selon la revendication 15, le procédé comprenant en outre après l'extraction de ladite instruction d'opération vectorielle :
le décodage, par un module de décodage, de l'instruction d'opération vectorielle acquise (S2) ; et
la réalisation, par une file d'attente d'instructions, d'un stockage séquentiel pour l'instruction d'opération vectorielle décodée.

20. Procédé selon la revendication 19, le procédé comprenant en outre avant l'acquisition de ladite instruction d'opération vectorielle :
la détermination si ladite instruction d'opération vectorielle accède à un même vecteur qu'une instruction d'opération vectorielle précédente : si tel est le cas, ladite instruction d'opération vectorielle n'est pas fournie à ladite unité d'opération vectorielle jusqu'à ce que l'exécution de l'instruction d'opération vectorielle précédente soit terminée ; sinon, ladite instruction d'opération vectorielle est fournie directement à ladite unité d'opération vectorielle.

21. Procédé selon la revendication 20, dans lequel, lorsque ladite instruction d'opération vectorielle accède au même vecteur que l'instruction d'opération vectorielle précédente, le stockage de ladite instruction d'opération vectorielle dans une file d'attente de stockage, et cette instruction d'opération vectorielle dans la file d'attente de stockage n'est pas fournie à ladite unité d'opération vectorielle jusqu'à ce que l'exécution de l'instruction d'opération vectorielle précédente soit terminée (S4).
